Europäisches Patentamt

European Patent Office

Office européen des brevets

(11) Publication number: **0 083 395**
**A2**

## (12) EUROPEAN PATENT APPLICATION

(21) Application number: **82109185.7**

(22) Date of filing: **05.10.82**

(51) Int. Cl.³: **G 06 K 11/06**

(30) Priority: **31.12.81 US 336461**

(43) Date of publication of application: **13.07.83 Bulletin 83/28**

(84) Designated Contracting States: **DE FR GB**

(71) Applicant: **International Business Machines Corporation, Old Orchard Road, Armonk, N.Y. 10504 (US)**

(72) Inventor: **Garwin, Richard Lawrence, 16 Ridgecrest East, Scarsdale New York 10583 (US)**
Inventor: **Levine, James Lewis, 1474 Indiana Avenue, Yorktown Heights New York 10598 (US)**

(74) Representative: **Petersen, Richard Courtenay, IBM Svenska AB Patent Operations Box 962, S-181 09 Lidingo (SE)**

(54) Indicator location determination interface.

(57) An interface for determining the co-ordinate location of a manually movable stylus (27) on a plane surface (26) comprises a laser beam source 10 directed onto a rotating mirror scanner (12) behind the surface. The beam is reflected by the scanner along two dihedral mirrors (18, 19) at right angles and is reflected across the front of the surface to retroreflector strips (13, 15) at right angles, and back to a photodetector. The substantially constant photodetector current level is interrupted by the stylus (27) and the angular relationships derived from the timing of the interruptions. From these, the cartesian co-ordinates are determined.

INDICATOR LOCATION DETERMINATION INTERFACE

This invention relates to interfaces for determining the co-ordinate location of a manually movable indicator on a surface.

The invention is particularly applicable to interfacing the movement of an indicator for manual input to data processing operations.

An interface of this type translates the location of a manually moved indicator into specific co-ordinates in an operating surface area. The operating surface area may be the two-dimension face plate of a cathode ray tube or other type display.

Manually moved indicator to data processing interfaces have received some attention in the past in introducing manual movements into a data processing operation and systems have been built using many physical phenomena for stylus detection. Among the more popular phenomena are acoustic, optical, force-sensing, capacitive and electrostatic. Each specific technology based on a particular phenomenon provides a different mixture of accuracy, human-factor considerations and cost to performance considerations.

The tracking of the location of a manually moved stylus by the use of a technology that is based on optical phenomena has many advantages.

The most promising technology from the standpoint of simplicity and precision involves the reflection of light from a moving beam scanner in a plane above an operating surface over which the manually positioned indicator or stylus is moved.

2

The present state of systems involving optical technology requires a moving member that provides an active role in the optics and thereby introduces a limitation on the moving members. Thus, US-A-3,898,445 describes the establishment of co-ordinates of a special stylus that emits a signal when a sweeping beam strikes it.

A 1971 National Aeronautics and Space Agency Technical Note describes the use of two beams located at separate points on a single line and employs reflection from a special stylus, that has a cylindrical mirror so that the retroreflected beam is confined within the scan beam and thereby permitting the shaft angle of the scan beam mounting to be usable in determining the position of the indicator member.

The scope of the invention is defined by the appended claims, but it may also be considered as extending to a manual machine interface system wherein a manual machine interface system wherein a manually operated indicator is employed to introduce data to the machine by the position of the indicator, and identification of the desired precise position identification of the desired precise position location comprises retention of a recent history of indicator locations and specifying a particular historical location at a specific time previous to the last recorded location.

It may further extend to a manual movement to data processing interface for the specific location of a manually positioned physical indicator member, comprising in combination means for establishing identification data representative of the exact location of said manually positioned physical indicator member in an operating area, means for storing the immediate series of historical data representing each position occupied by said physical indicator member during movement of said physical indicator member, means for indicating a termination of manual movement of said physical indicator member, and means for selecting an exact data representation of the specific location of said physical indicator member from said historical series of positions a position that is prior in time to the location occupied by said indicator member at the time of a signal from said termination means.

It may be considered also as a terminal for data processing apparatus, comprising in combination a data processing display having an essentially plane viewing area surface, a manual movement to data processing specific location of a manually positioned physical indicator member interface positioned in a plane essentially parallel to said viewing surface, said interface comprising means for establishing identification data representative of the exact location of said manually positioned physical indicator member in a plane area having boundaries smaller and related to the boundaries of said viewing area surface of said display, means for storing the immediate series of historical data representing each position occupied by said physical indicator member during movement of said physical indicator member, means for indicating a termination of manual movement of said physical indicator member, means selecting an exact data representation of the specific location of said physical indicator member from said historical series of positions a position that is prior in time to the position occupied by said physical indicator member at the time of a signal from said termination means, and means for retention and display of each said specific manually operated indicator position as movement occurs over said display viewing surface.

A particular embodiment is a manual processing entry terminal comprising in combination an operating transparent surface essentially rectangular area having essentially two orthogonal dimensions, a source of essentially collimated light passing diagonally beneath said surface, a scanning mirror positioned in movable relationship at the diagonally opposite corner of area from said collimated light source

4

and operable to cause a beam of light from said collimated light source to scan through a 90 degree angle, and first and second dihedral mirrors positioned with the spine of said mirror aligned with the edge of said surface, each dihedral mirror positioned on an opposite side of said operating area from said scanning mirror and first and second retroreflected light strips positioned on the remaining sides of said operating area.

According to another aspect of the invention interface apparatus for translating manual positioning into data in a data processing operation, comprises in combination sensing means for following both the position and the contact of a manually moved indicator member with respect to an operating area surface, memory means for serially storing a quantity of recent position locations, error screening means operable based on duration of contact of said manual indicator with said surface to eliminate contact bounce and to identify the end of a clear positioning movement, and data selection means based upon the last position of said manual indicator, said recent stored positions, and said positioning movement from said error screening means.

According to a further aspect the invention provides an improvement in a data processing interface for a manually positioned physical indicator member of the type wherein position information of said indicator member is derived from light that is absorbed or refracted by the indicator member, by which indicator member position coordinate determination is derived from angular information of a beam of scanning light produced by the interruption by said indicator member of a photodetected current.

How the invention can be carried into effect is hereinafter particularly described with reference to the accompany drawings, in which :-

FIGURE 1 is a simplified view of the optical system for use in one embodiment of the invention;

FIGURE 2 is a graph of photodetector current against time derived from the system of Fig.1.;

FIGURES 3A, 3B and 3C are a top and two side views of the optical system of another embodiment of the invention;

FIGURE 4 is a geometrical layout to illustrate the establishment of x-y co-ordinates for an indicator in the system of Figs. 3A, 3B and 3C;

FIGURE 5 is an illustration of a display with movement retention;

FIGURES 6, 7 and 8 illustrate the retention, display and erasure properties of an interface according to the invention;

FIGURES 9 and 10 are graphs illustrating the properties of retroreflective material;

FIGURE 11 is an exemplary detector and preamplifier circuit;

FIGURE 12 is an exemplary logic level conversion circuit.

FIGURES 13A, 13B and 13C are illustrations of analog and digital signal levels;

FIGURE 14 is an exemplary circuit for timing;

FIGURE 15 is a schematic of stylus contact with a surface;

FIGURE 16 is a flowchart of the data entry point selection procedure;

0083395

6

FIGURE 17 is a flow chart of the stylus-down phase;

FIGURE 18 is a flowchart of the first loss of contact phase;

FIGURE 19 is a flowchart of the stylus-up phase.

FIGURES 20, 21 and 22 are examples of the interaction of the entry point selection procedure with stylus contact variations; and

FIGURES 23 and 24 illustrate the optical system of a preferred embodiment of the invention.

The invention employs angular information acquired through the interruption of a photodetected current produced by a scanning light beam to determine position co-ordinates of a manually moved indicator or stylus and employs the history of position data to select precise position co-ordinates. The indicator member or stylus is free of reflectivity limitations, the properties of different portions of the indicator may be sensed for information transfer purposes and it may even be the finger of the operator.

For simplicity of explanation, the term stylus will be used for the indicator.

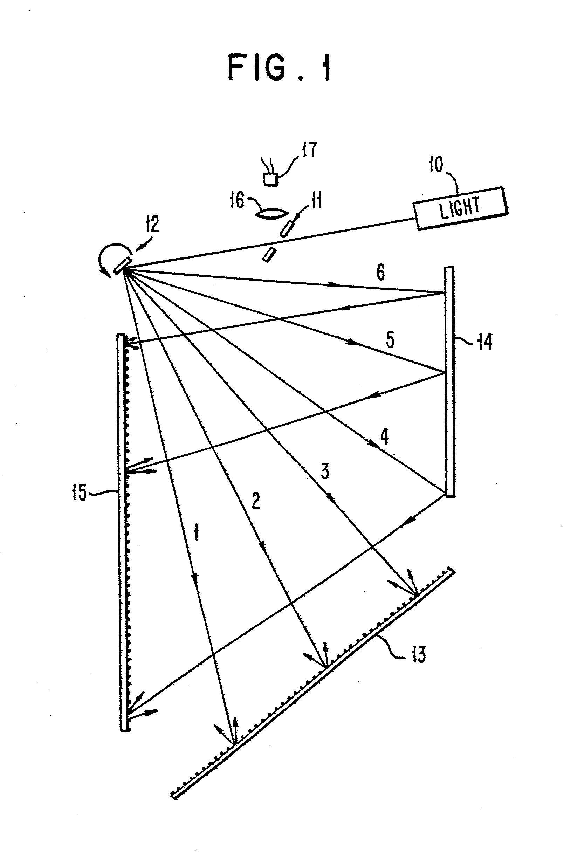

A light source 10 (Fig.1) provides a beam which enters an optical system through a small hole in a stationary mirror 11. The beam is of small diameter and relatively collimated. A laser serves as a very satisfactory light beam source. The beam is then swept across a reference surface in the plane of the figure by a rotating or vibrating mirror scanner 12. For a portion of the rotation, the beam crosses the reference surface as illustrated by rays 1,2 and 3 to strike a retroreflective strip 13. The strip 13 may be made of beaded material similar to that used on highway signs or high-gain projection screens, preferably having a more directional character. Such a material reflects back towards the source a large fraction of the incident light, the amount being relatively insensitive to the angle of incidence.

The reflected light is confined to a cone having a width of a few degrees centred on the reversed direction of the incoming rays 1,2 and 3 as shown by the reflected multiple arrows. This light is reflected again by mirror 12 and stationary mirror 11 into a collecting lens 16 which provides a focus at photodetector 17.

During continuous scanning, there will be a steady photocurrent while the beam traverses the strip 13. As the scan continues, the beam strikes a stationary mirror 14 inclined to the strip 13 and is deflected across the reference surface from a new direction to strike a retroreflective strip 15 as indicated by rays 4,5 and 6. The retroreflected light is again directed to photodetector 17 by mirrors 14, 12 and 11 and lens 16.

If a stylus, for example the finger of a user, is placed on the reference surface, the light beam is interrupted twice.

It has been discovered that by providing a light that is interrupted by the stylus, many limitations on stylus materials are removed and the properties of the stylus itself become available for information purposes. Even the finger of the user is satisfactory.

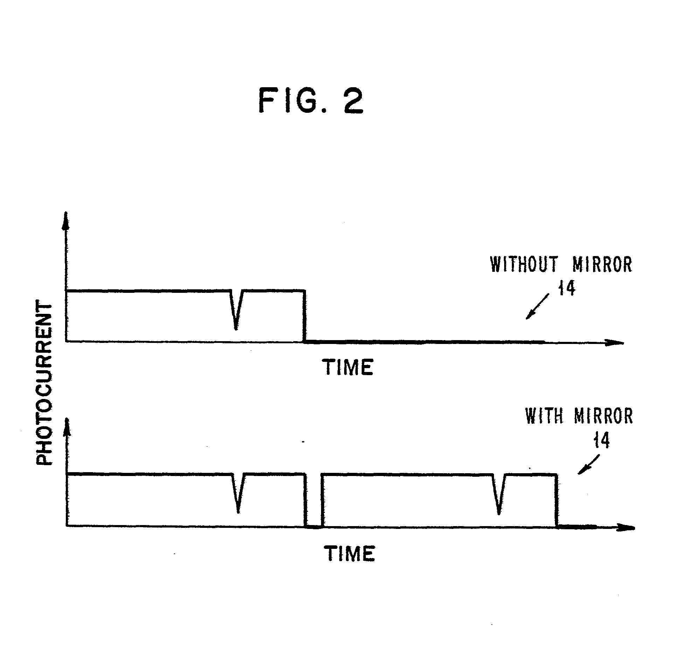

The scanning light beam provides a steady photocurrent. A stylus located anywhere in the area of the reference surface intercepts the beam for two ranges of scanning angle, producing dips in the photocurrent. The scanning angles at which the stylus is located are

8

established by locating the centre of the dip relative to a suitable datum, for example a timing mark produced by the beam passing off the end of the strip 13 before encountering the end of mirror 14. Fig.2 shows the photocurrent both with and without mirror 14.

Determination of the two angles of the scanning beam where the dips appear will then permit the location of the stylus, such as by the identification of x-y position co-ordinates of the stylus to be established by simple triangulation.

As the stylus is manually moved, certain psychomotor limitations are encountered and what the operator thinks is one position of the stylus may in fact be several. Accordingly, several co-ordinate positions may be established during a sequence of scans and a decision on which co-ordinates represent the most accurate data for the application involved is needed for accuracy. It has been discovered that a decision on the specific position co-ordinates when made employing the history of recent stylus position data provides improved accuracy.

The combination of being able to track and to specify precisely the location of an indicator member on an operating area provides a manual indicator to data processing input interface that permits a variety of applications, such as highly accurate input devices, displays, terminals and teleconferencing input stations.

The optical system of Fig.1 can be brought into a closer relationship with the boundaries of a working area by optically folding the beams under a reference surface in the operating area. This may be accomplished with 90 degree dihedral mirrors positioned along two orthogonal edges of the reference surface. A dihedral mirror is an L-shaped elongated reflecting member generally made up of two mirror strips intersecting on a line or spine at about a right angle.

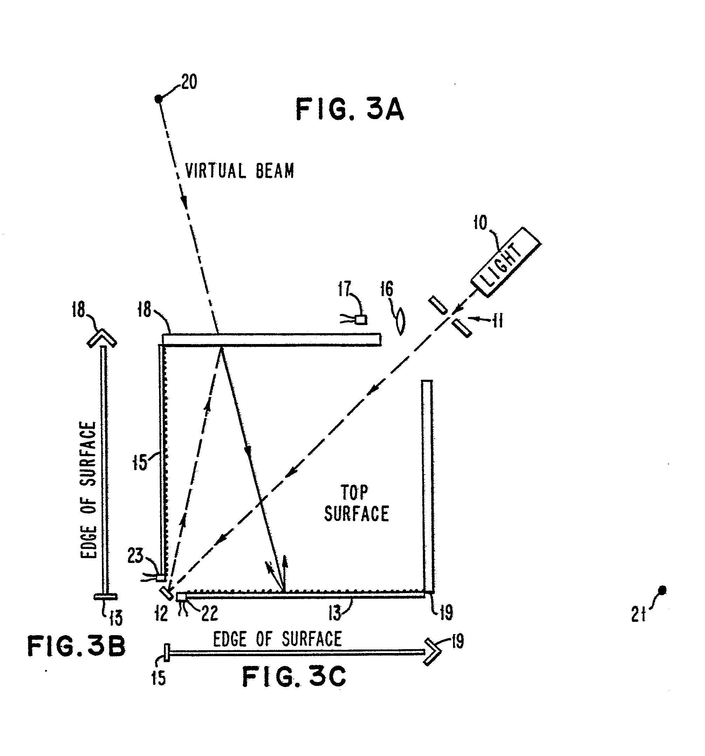

Such an optical system (Figs. 3A, 3B and 3C) includes dihedral mirrors 18 and 19 which have their spines aligned with the reference surface and serve to transfer a beam from below to above the reference surface, while acting in other respects as plane mirrors. The beam that passes beneath the reference surface is shown as a dotted line, whereas the beam that passes above the surface is shown as a solid line. The beam from source 10 through mirror 11 enters diagonally across and beneath the surface, strikes the scanner 12 which is a rotating or vibrating mirror, and is reflected, still beneath the surface, to the dihedral mirror 18. At the mirror 18, the beam is reflected from the lower facet to the upper facet and is reflected across, above and parallel to the reference surface to strike the retroreflector 13. The retroreflection as indicated by the multiple arrows providing a high steady light for the photodetector 17.

Rotation or vibration of mirror 12 causes the position at which the beam strikes the mirror 18 to move along the mirror to about the middle thereof, when the reflected beam strikes the corner of the retroreflector 13 and mirror 19. Continued rotation causes the beam reflected by the mirror 18 to be reflected also by the mirror 19 and to pass below the surface to the retroreflector 13. This continues until the beam passes off the mirror 18 across the gap and on to the mirror 19, when it is reflected by the mirror 19 to the mirror 18 and reflected below the surface to the retroreflector 15. About the middle of mirror 19, the beam is reflected directly to the corner of retroreflector 15 and mirror 18 and thereafter the beam moves across the surface of retroreflector 15.

This arrangement causes the single beam from source 10 to behave optically as if it originated from two "virtual scanners" located at imaginary locations 20 and 21. When the beam strikes the mirror 18 first, the beam behaves as though originating from location 20. When

10

the beam strikes the mirror 19 first, the beam behaves as though originating from location 21.

Timing to correlate scan with angular information of a line through the stylus and a line from the relevant virtual scanner location to the axis of the mirror 12 is provided as the beam strikes phototransistors 22 and 23, located at adjacent ends of retroreflectors 13 and 15.

For some scan angles, the beam, after reflecting from one dihedral mirror, will strike the other dihedral mirror rather than a retroreflective strip directly. This results in the beam being brought beneath the surface again. The retroreflective strips are extended so that they are both above and below the reference surface.

It should be noted that some care is required in arranging the mirrors and retroreflectors to ensure that the photocurrent is not interrupted during the transfer from above to below the reference surface.

With such a system, almost the entire area of the surface is usable, that is to say, a stylus placed almost anywhere on the surface is detectible by beam interruption.

Where the system is to be used in front of a cathode ray tube or other display, the reference surface can be made of transparent material. It should be noted, however, that because beams pass beneath the reference surface, some physical medium such as glass is preferred to serve as a stop to prevent the stylus from inadvertently being placed in a position that will block the lower beams.

The angular information is acquired as follows.

The beam is considered as two virtual scanner beams originating at locations 20 and 21.

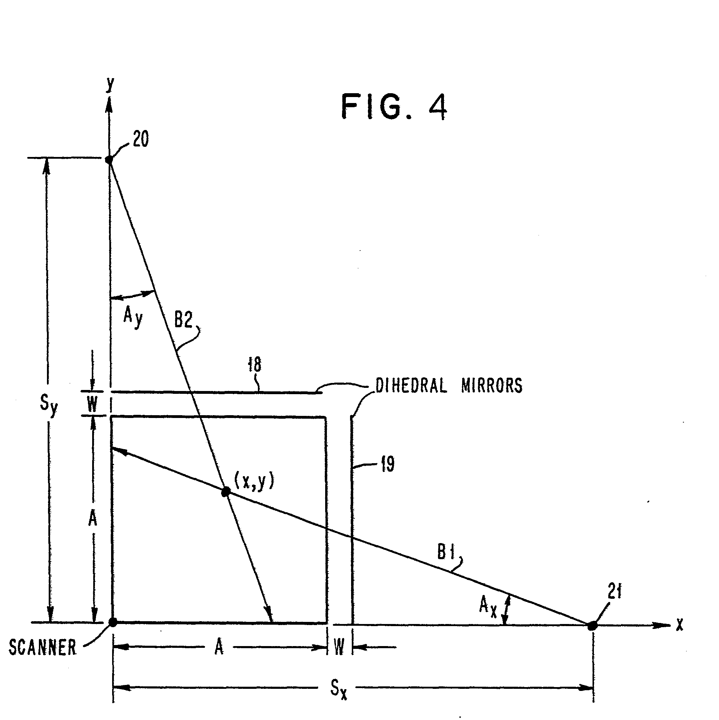

Considering that the angular information acquired is to be translated into x-y co-ordinates of the operating area, the geometrical triangulation to establish those x-y co-ordinates of the stylus in the operating area may be developed as shown in Fig.4. The stylus is assumed to be located at the intersection of two beams labelled $B_1$ and $B_2$. The co-ordinate axes are labelled x and y and the origin point is located at the point labelled scanner which is the interesection of the incoming beam and the scanning mirror facet.

The triangulation is as follows :-

Let $A_x$ be the angle between $B_1$ and the x axis and let $A_y$ be the angle between $B_2$ and the y axis. Let $S_x$ be the distance between the origin and the virtual scanner 21 located along the x axis, while $S_y$ is the distance to the scanner 20 located along the y axis. The x and y co-ordinates in accordance with the invention are then expressed in terms of $S_x$, $S_y$ and the two angles $A_x$ and $A_y$ in accordance with equations 1 and 2.

12

$$\text{Equation 1} \quad X = \tan(A_y) \frac{S_y - S_x \tan(A_x)}{1 - \tan(A_x)\tan(A_y)}$$

$$\text{Equation 2} \quad Y = \tan(A_x) \frac{S_x - S_y \tan(A_y)}{1 - \tan(A_x)\tan(A_y)}$$

Normally, $S_x$ will be chosen equal to $S_y$.

The angles $A_x$ and $A_y$ may in turn be expressed in terms of the scanner angle which will be referred to as $A_s$. Assuming the scanner is rotating counterclockwise, and the beam is leaving the scanner along the x axis when $A_s=0$. In accordance with the laws of reflection, the angles $A_x$ and $A_y$ are related to $A_s$ as set forth in equations 3 and 4.

$$\text{Equation 3} \quad A_x = 4A_s$$

$$\text{Equation 4} \quad A_y = \pi/2 - 4A_s$$

It will be clear to one skilled in the art that the triangulation procedure will fail if $B_1$ and $B_2$ were to approach being parallel. This could occur at the corner of a sufficiently large area diagonally opposite from the scanner, corresponding to $A_x = A_y = \pi/4$. Near this singular point, small measuring or computing errors become magnified so that the usable area will have to be somewhat smaller than the actual available size.

As an illustration, assume that the working surface is a square of side A as shown in Fig.4. This leaves an unusable border of width $W = (S/2) - A$, where we assume $S_x = S_y = S$. Let the error in measuring angles

13

$A_x$ and $A_y$ be of order $\delta A$, and let the resulting positional errors be $\delta Q$. Near the corner of the square, the errors would be expressed as shown in equation 5.

$$\text{Equation 5} \quad \delta Q \approx \left(\frac{S}{2}\right)\left(\frac{S}{2W}\right)\delta A$$

In order to assist one skilled in the art to practice the invention and achieve high resolution accuracy, the following description will be developed around some particular illustrative dimensions.

Assuming S/2=355.6mm (14.0 inches) and A=304.88mm (12.0 inches). This leaves a border W=50.8mm (2.0 inches). Then the position errors will be about 2489.2$\delta A$ mm radians (98$\delta A$ inch radians), with $\delta A$ in radians.

The optical system is subject to the following requirements. The light source must be small and collimated. A laser fills these requirements very well.

In the forward direction, a small diameter beam must scan across the tablet at a nearly constant height. The required precision for the 304.8mm (12 inch) square area example is of the order of 1 minute of arc.

In the reverse direction, the system must collect as much of the retroreflected light as possible and deliver it to the photodetector, hence the numerical lens aperture for the lens 16 should be kept large. Aiming accuracy of the lens is of reduced importance as the return light is not well collimated.

14

The height of the various components should be minimized in order that the apparatus be convenient to use. This may produce some conflict with the large lens aperture but an acceptable compromise is possible.

Where the light source is a laser, the following example specifications should be of assistance. A 0.5 mw He-Ne laser provides more than enough power for the 304.8 x 304.8mm (12x12 inch) working area and is completely eye-safe. It is equipped with a beam-expanding lens and a focusing lens chosen so as to minimize the beam diameter over the surface. A diode laser is more compact and less expensive, and would probably be used in a production device.

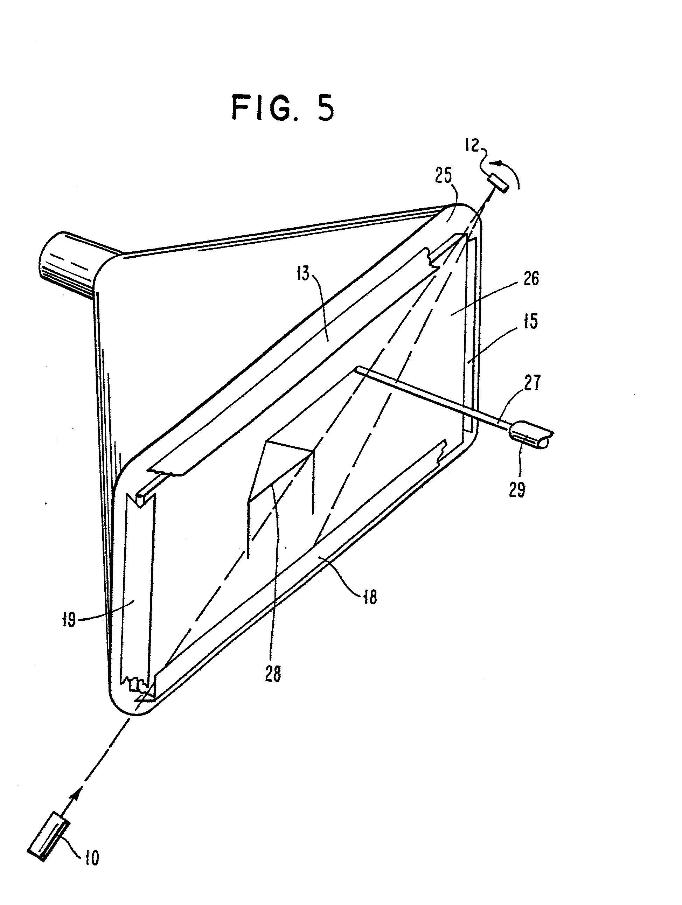

Referring to Fig.5, an illustration is provided of the optical system of Figs. 3A, 3B and 3C mounted in connection with a display to provide indicator movement retention. This permits a display of the pattern that has been traced. The display may be mounted essentially coincident with the plane of the scanner so as to provide a terminal or it may be in connection with a remote location for teleconferencing purposes.

The display member shown for illustration is a cathode ray tube 25 having positioned between the operator and the face thereof, the structure of Figs. 3A, 3B and 3C. The surface 26 is a reference surface of an operating area. It is positioned so that light from a source can pass beneath the surface 26 to be reflected by the scanner 12. The light beam is then brought to the front of the surface 25 by dihedral mirror 18 or 19. The scanning beams strike retroreflector 13 or 15, except where interrupted by a stylus 27. The system employs standard techniques in the art such that lines formed by a series of x-y coordinates of the stylus tip drawn by the pencil example stylus 27 are retained as the picture 28 is traced and erasure is accomplished by

15

having the system recognise the different refractive qualities of an eraser end 29 of the stylus, which is of greater diameter than the tip.

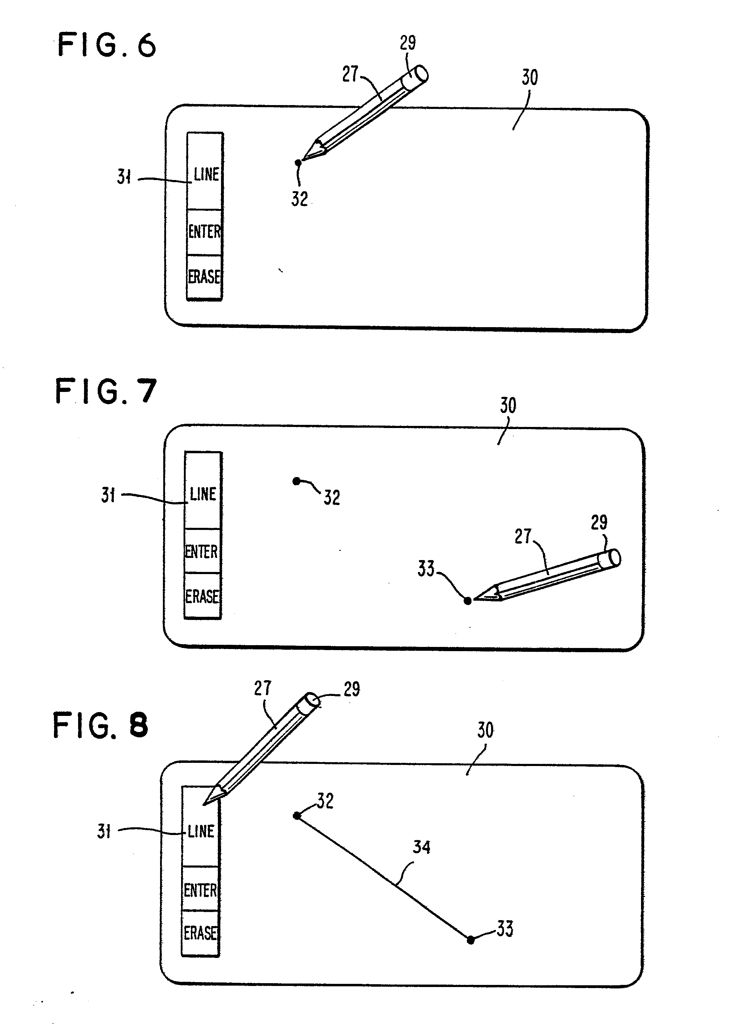

One example of the retention, display and erasure capabilities is illustrated in Figs. 6, 7 and 8 which show a display screen 30 having a region 31 divided into sections labelled LINE, ENTER and ERASE. With the capability of the invention of determining the location of the stylus, specific portions of the operating area can be assigned to communicate with the system. Audio acknowledgement is usually provided. Such portions are called "soft keys" and the audio is a simple "beep". The soft key region line is first touched and the system responds with a beep.

The system will identify and display the location of a point 32 at which a stylus touches and interrupts the beam. The soft key ENTER is touched by the stylus. The stylus 27 is then positioned to touch and identify a second point 33 (Fig.7), while the system retains the display of point 32. The stylus is again positioned to touch the soft key ENTER. The system then retains and displays both points 32 and 33. The stylus is then positioned to touch the soft key LINE (Fig.8), so that the system displays and retains a line 34 between the points. If it became desirable to erase the line 34, movement of the stylus 27 to touch the soft key ERASE will remove the line.

The system, because it operates by interrupting a beam of light, will recognise the optical properties of a stylus such as the different reflectivity of the eraser portion 29 or a difference in size or diameter of parts of the stylus 27. Using the different optical property recognition capabilities, it is possible to achieve functions other than by using soft keys.

16

To recognise a difference in stylus cross-sectional size or material properties, it is desirable to use a laser beam having a diameter smaller than that of the intended stylus. This simplifies the signal detection circuitry, and can be accomplished by bringing the beam to a controlled focus near the centre of the surface area.

The behaviour of a laser beam in the vicinity of a focus has been thoroughly studied in the art. The following is a simplified discussion which is adequate for the purpose of practising the invention.

Assume that a laser beam of wavelength $\lambda$ is brought to a focus with waist diameter $D_o$. The beam will diverge around the focus at a rate determined by a characteristic length $Z_o$ given by equation 6.

$$\text{Equation 6} \quad Z_o = \frac{\pi D^2_o}{4\lambda}$$

At a distance Z from the focus (in either direction), the beam diameter D will be as set forth in equation 7.

$$\text{Equation 7} \quad D = D_o \sqrt{1+(Z/Z_o)^2}$$

It will be observed that equation 6 is an even function of Z, hence the best arrangement is to produce a focus at the centre of the operating surface area. The maximum diameter will then occur at the edges of the area. Let $Z=Z_e$ be the longest distance from the centre of the area to an edge. With $\lambda$ and Z fixed, the only free parameter in equation 6 is $D_o$. Minimising $D(Z=Z_e)$ with respect to $D_o$, we find the relationship expressed in equation 8.

17

$$\text{Equation 8} \quad D_o = \sqrt{\frac{4\,Z_e}{\pi}}$$

With this choice, the maximum beam diameter (at $Z=Z_e$) will be $D_o\sqrt{2}$. In the present example 12 inch square area, the distance $Z_e$ is about 20 cm. We then find (for $\lambda = 6300A$) that $D_o$ should be 0.4mm, leading to a maximum diameter of 0.6mm at the edges. The laser and lenses must be located outside of the area, so that the distance to the focus after reflection from scanners and dihedral mirrors is about 1000mm.

Thus, the problem reduces to forming a 0.4mm waist at a distance of 1000mm. A single lens would suffice if the laser divergence were 0.4 milliradians, mr. The divergence is approximately 0.8mr, so that a beam-expander is required. This is made as follows. A lens of focal length $F_1$ brings the beam to a focus with waist diameter $D_1$ as expressed in equation 9.

$$\text{Equation 9} \quad D_1 = F_1 A_o$$

where $A_o$ is the 0.8 mr initial divergence.

A second lens of focal length F then forms a magnified waist at the desired 1000 mm distance. The final waist location L and diameter D are given as expressed by equations 10, 11 and 12.

$$\text{Equation 10} \quad L = F\,\frac{(L_1(L_1-F)+Z2_1)}{((L_1-F)^2+Z^2{}_1)}$$

$$\text{Equation 11} \quad D = \frac{D_1 F}{\sqrt{((L_1-F)^2+Z^2{}_1)}}$$

18

$$\text{Equation 12} \qquad Z_1 = \frac{\eta D_1^{\ 2}}{4\lambda}$$

Here, $L_1$ is the distance from the initial waist to the second lens and L the distance from that lens to the final waist. The parameter $Z_1$ represents the length scale for variations in beam diameter in the vicinity of the initial waist. This may be compared with equation 6.

A simple design procedure is to make an initial choice of F, the focal length of the second lens. Replace D in equations 11 and 12 with the desired waist diameter $D_0$ and L with the 1000 mm focusing distance. After some manipulation, one finds the required intermediate waist diameter $D_1$ to be as expressed in equation 13.

$$\text{Equation 13} \qquad D_1 = \frac{FD_0}{\sqrt{((L-F)^2 + (Z^2_{\ 0}))}}$$

The focal length of the first lens may then be determined from equation 14.

$$\text{Equation 14} \qquad F_1 = \frac{D_1}{A_0}$$

The spacing $L_1$ between this waist and the second lens is then obtained by equation 15.

$$\text{Equation 15} \qquad L_1 = \frac{F(L(L-F) + (Z_0)^2)}{((L-F)^2 + (Z_0)^2)}$$

19

The intermediate waist is formed a distance $F_1$ from the first lens, hence the inter-lens spacing is $F_1+L_1$.

It should be noted that the above equations are only valid if the lenses do not truncate the laser beam. Thus, the diameter of the first lens must exceed the input laser beam diameter. The required minimum diameter for the second lens D2 is easily calculated in accordance with equation 16.

$$\text{Equation 16} \qquad D_2 = D_1 \sqrt{(1+(L_1/Z_1{}^2))}$$

As an example, if F is chosen as 50mm then $F_1$ will be 26mm and the lenses will be spaced about 78mm apart. The second lens diameter will have to exceed 2mm.

These are some considerations that may be of assistance to the practise of the invention that are associated with the other components. The scanner is required to deflect the laser beam through a total angle of about 90 degrees. A polygonal mirror driven by a small motor at 60Hz is satisfactory and is preferred because a 90° angular range is considered large for most available vibrating scanners. In principle, an eight-sided polygonal scanner could provide eight 90-degree scans per revolution. However, the mirror is required to collect the returning retroreflected light. Because the facets move as well as rotate, the poorly collimated return light would be progressively vignetted or faded near the ends of the scans, leading to large variations in photocurrent. An improvement is achieved toward reducing this by using a 4-sided polygon, with oversized facets.

Returning to the embodiment of Figs. 3A, 3B and 3C, the considerations involving the dihedral mirrors are as follows. The beam should leave the scanner parallel to the underside of the working area surface so

20

that it will remain parallel after translation to the top surface. This will occur if the dihedral angle of the mirror is exactly 90 degrees. If the angle differs from 90 degrees by $\varepsilon$, then the output beam angle will be in error by $2\varepsilon$. If both dihedral mirrors have the same but incorrect angle, then the error can be compensated by adjusting the incident laser beam angle, or by tilting the scanner.

The dihedral mirrors may be constructed of strips of front-surfaced mirror cemented into holders machined from rectangular metal stock. The machining may be done in such a way as to ensure that the two holders would be identical, although the angles may differ from 90 degrees by a few minutes of arc which is easily compensated. The holders and other parts of the system are mounted on a flat base plate cut, for example, from jig-plate metal stock.

The retroreflectors may be made by attaching self-adhesive material to metal strips.

Several types of retroreflective material are available in the art. All are essentially semi-microscopic glass beads bonded to a metallic coating on a paper backing. The beads may be exposed, or else protected by a polymer coating. Uncoated retroreflective material has about 4 times the reflectivity of coated material, and works over a wider range of incident angles. However, it is susceptible to damage and is difficult to clean. With the system of the preferred embodiment, the signal-to-noise ratio is sufficiently large that it is possible to use protected or coated material without penalty.

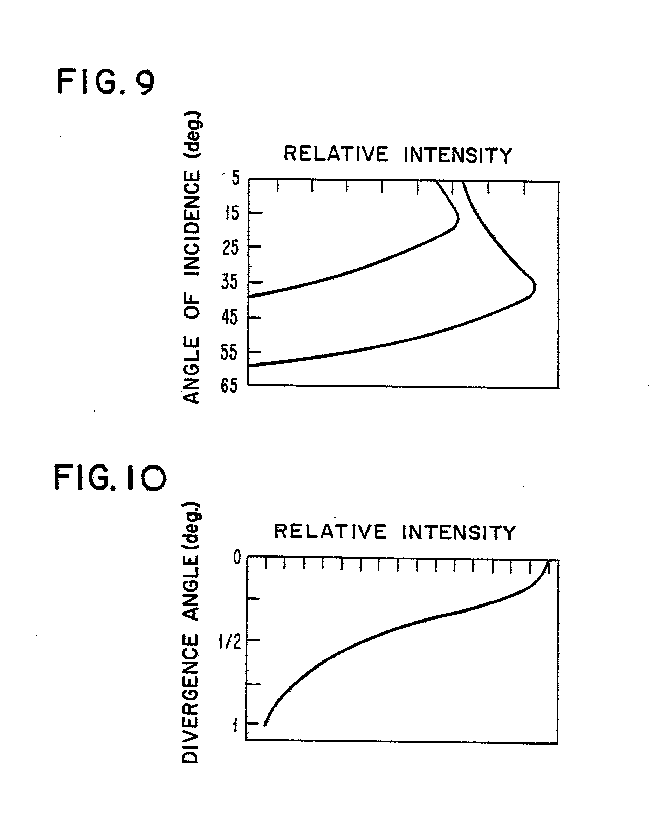

The variation in reflection efficiency of the retroreflective strips with angles of incidence and divergence is shown in Figs. 9 and 10. There is a rapid fall-off for angles of incidence beyond about 40 degrees.

Referring again to Figs. 3A, 3B and 3C, it will be appreciated that the light reaching strips 13 and 15 may arrive at angles less than 45 degrees. Thus, for reflection efficiency, it is convenient to machine a number of small facets into the holders for strips 13 and 15, so as to tilt the retroreflector tapes in the correct direction.

Referring next to Fig.10, the angular distribution of the retroreflected light, with angles measured with respect to the incident beam is shown. Although the light is reasonably directional, the cone angle is much larger than the collection aperture. The aperture is rectangular. In the horizontal direction, the aperture will be truncated either by the scanner mirror or by the gap between the dihedral mirrors. An increase in the gap size will decrease the usable surface relative to the overall dimensions. In the vertical direction, the aperture is truncated by the surface on the one hand, and by either the base plate, the scanner or the dihedral mirrors on the other. Increasing any of the dimensions will make the apparatus dimensions thicker. For the illustrative example under discussion, a horizontal aperture of about 1/2 degree is achieved, and a vertical aperture of about 1/4 degree, with an overall thickness of about 30.48mm (1.2 inches). The system can use the least efficient but readily available coated retroreflective tape (3M-7922) made by the 3M Corporation, in order to collect about 0.02 percent of the initial laser power.

In the practise of the invention, the x-y co-ordinates of the stylus location are converted electronically to data processing compatible signals through the general functions of detection and preamplification, conversion to data processing logic signal levels, timing accommodation and conversion to digital numbers.

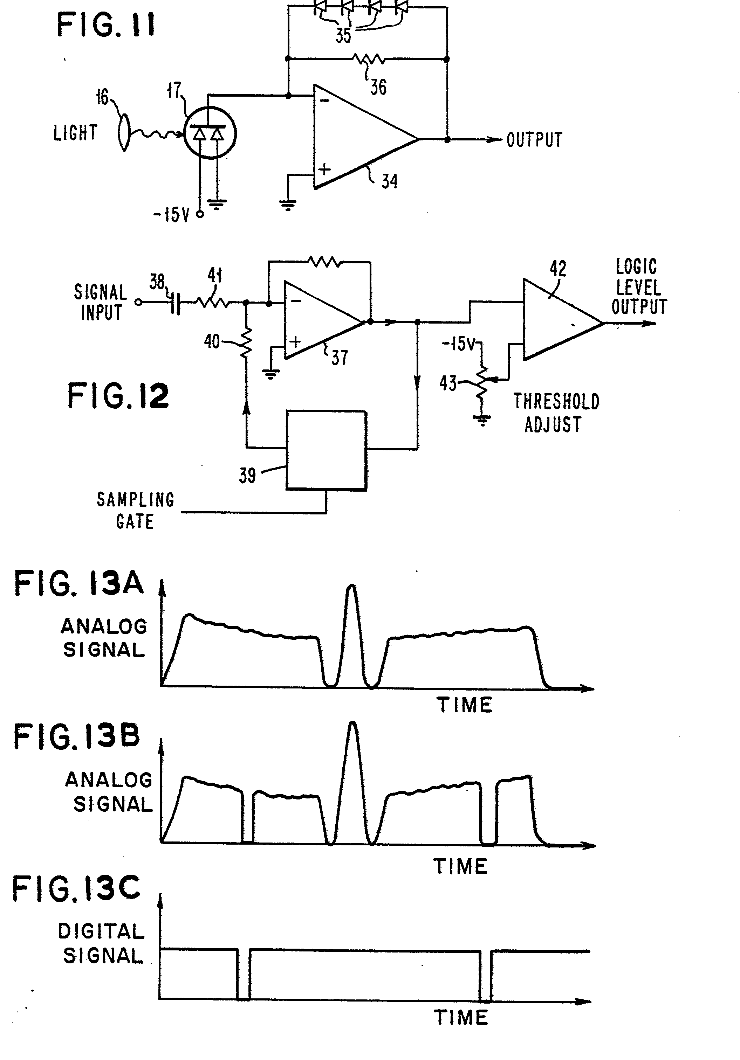

In the detection and preamplification functions, the following example specifications are employed. The duration of a complete scan is

22

approximately 2 milliseconds (ms), with 1 ms devoted to each virtual scanning centre. During this time, a 0.3mm diameter beam sweeps over a transverse distance of around 300mm. The rise and fall times thus will be of order 2 micro-seconds. The photodetector and amplifier chain must therefore have moderately wide-band performance and reasonably low spectral noise densities. A satisfactory unit for these specifications is the EG&G model SD-100 photodiode, driving a low-noise one-chip operational amplifier connected in a current-feedback mode as illustrated in connection with Fig.11.

Referring to Fig.11, using the same reference numerals as Figs. 3A, 3B and 3C for identical items, a small lens 16 collects the return light and focuses it onto the photodiode 17 connected between a negative voltage and ground. The photocurrent may be estimated as follows. It has been assumed that approximately 0.02 percent of the 0.5 mw laser power is returned to the detector. This is about 0.1 micro-watt. The photodetector 17 has a sensitivity of about 0.2 amps/watt at the laser wavelength, hence there will be about 0.02 micro-amps of signal current to an amplifier 134. At the output of the amplifier 134, the voltage signal-to-noise ratio is in excess of 100:1, although this is lowered somewhat by the fine-grained structure arising from the beaded retroreflective strips 13 and 15. Proper shielding and grounding techniques are required to avoid corrupting the signal with logic-circuit switching noise. In some cases, it may be desirable to place an interference filter in front of the photodetector to eliminate noise from ambient lighting.

Referring again to Figs. 3A, 3B and 3C, it will be noted that the beam will be sent directly back to the detector as the scan shifts from dihedral mirror 18 to dihedral mirror 19. The amplifier 134 would be driven into saturation, requiring a long recovery time. A diode limiter is therefore provided. Several diodes 35 are used in series

0083395

3

across a large resistor 36 to provide a reasonably linear transfer function for signal currents in the normal range.

In the conversion to logic level signal function, the following considerations apply. A normal stylus is large enough to completely block the small diameter laser beam, resulting in nearly rectangular pulses with clean edges. The large signal-to-noise ratio allows the direct detection of the leading and trailing edges of each pulse without filtering. However, some efforts should be taken to eliminate direct current (DC) drifts.

Referring to Fig.12, an illustrative circuit is provided in which the preamplified signal is fed to amplifier 37 for additional gain. The input to amplifier 37 is through a capacitor 38 which blocks slow DC drifts arising from such items as photodetector leakage currents. A true zero is restored by sampling the output of amplifier 37 at a time when the scanning beam is known to be off the retroreflectors. The arrangement is similar to that used in conventional video cameras. Sampling is performed by a conventional sample-and-hold circuit 39 whose output is combined with the input to amplifier 37 with isolation by impedances 40 and 41, ensuring that zero output voltage corresponds to zero signal current. The output signal from amplifier 37 is fed to voltage comparator 42 whose output switches between logic-level 0 and logic-level 1 when a pulse is present. In the example circuit of Fig.12, the comparison level is set manually by potentiometer 43. However, it could be obtained automatically by sampling the return signal from a retroreflector located just outside the active area.

Referring next to Figs. 13A, 13B and 13C, the signal levels are illustrated. Fig.9A shows the analog signal when a stylus is absent. The disturbance near the centre of the trace occurs when the beam scans across the gap between the dihedral mirrors. The overall variation in signal level results from vignetting of the return beam by the scanning mirror and by the effect of angle-of-incidence variations on the retroreflective strips. Fig. 13B shows the analog signal with a stylus present. Fig. 13C shows the digital output of the circuit of Fig.12 after being gated with a blanking signal.

There are certain timing functions to be maintained. Circuitry is provided to form digital numbers representing the occurrence times of the four edges, that is the leading and trailing edge of each pulse, and passes them to a computer for final analysis. Because the stylus position is obtained by triangulation, precision is required in measuring the angles. If cost were of no concern, a precision shaft encoder could be mounted on the motor. A less expensive alternative takes advantage of low cost of circuitry in combination with the large optical lever arm provided by the scanned laser beam.

Referring again to Figs. 3A, 3B and 3C, two phototransistors 22 and 23 are mounted at the edges of retroreflector strips 13 and 15, respectively. The laser beam strikes phototransistor 22 just before it begins scanning retroreflector 13, and strikes phototransistor 23 just after it leaves retroreflector 15. These detectors 22 and 23 provide reference timing markers which have a fixed relationship to the geometry of the system. The large optical lever arm from the virtual sources allows the use of simple photodetectors and yet provides precise timing markers.

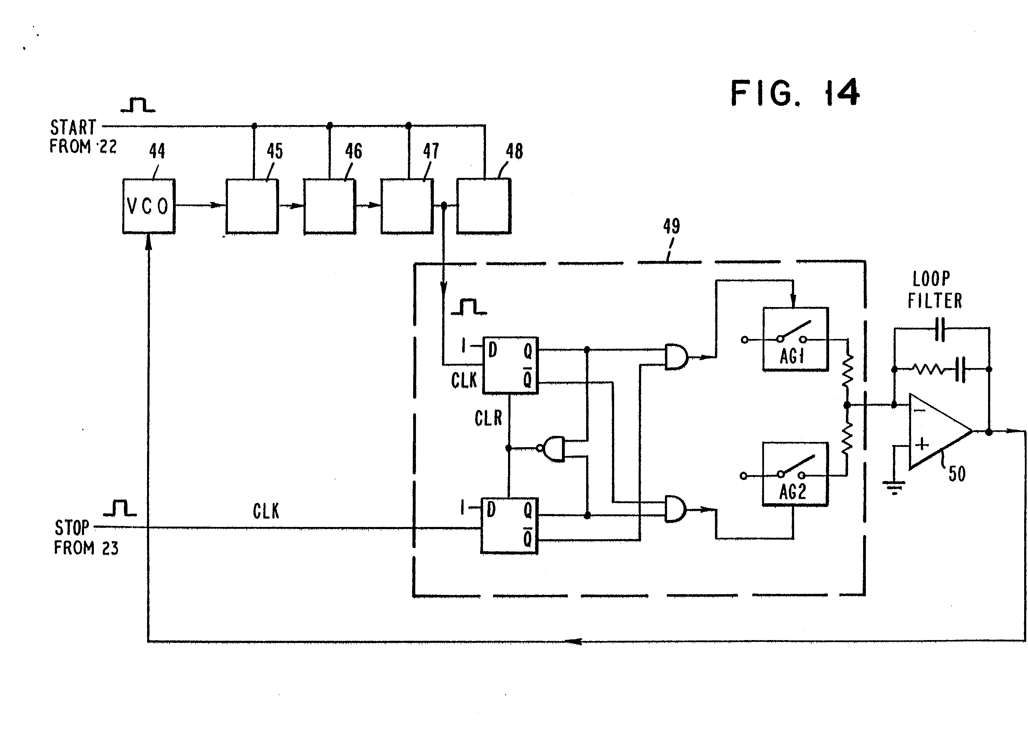

Referring to Fig.14, an example circuit is provided. A voltage controlled oscillator (VCO) 44 is synchronized so as to provide a fixed number of clock pulses between these markers, each pulse corresponding to a precise angular increment. The VCO 44 is started by the pulse from detector 22 and its output is counted by a 12-bit counter made up of 3 four-bit counters 45, 46 and 47 in series. The oscillator has a period of about 0.5 microseconds, which determines the final resolution of the measurements. The 12-bit counter generates a pulse after a count of 4096 is reached, hose time-of-occurrence is compared with that of the pulse from detector 23 by a standard digital phase detector circuit 49. If they differ, a correction voltage is applied to the VCO 44 through a holding circuit 50. The arrangement is similar to a phase-locked loop, except that the error is sampled and corrected only at discrete intervals. When the loop comes to equilibrium after a few scanner revolutions, there will be exactly 4096 pulses between the pulses from detector 22 and 23. Thus, the approximately 90 degree range of the scanner will be divided into 4096 equal increments. These increments are independent of the speed of the motor and the position of the mirror with respect to the drive shaft, and nearly independent of the alignment of the incoming laser beam. Further, the oscillator 44 need have only good short-term stability. The circuit of Fig.14 uses only inexpensive integrated circuits. The phototransistors 22 and 23 may be replaced by small vertical strips of retroreflective tape, arranged to introduce coded pulse patterns into the data stream from the main signal amplifier. These pulse patterns may be detected and used to drive the timing servo loop.

The final function is the conversion to digital numbers. A complete set of data consists of four digital numbers representing the leading and trailing edges of each pulse. These are obtained by storing the value of the 12-bit counter of Fig.14 when the relevant edge occurs. The data values are then transferred for processing which calculates the centre of each pulse before performing the geometrical computations. Referring to the signal waveforms of Figs. 13A and 13B, it is apparent that several blanking pulses are needed to limit detection to the relevant range of angles. In addition, gating signals are needed to activate the sample-and-hold gate 39 of Fig.12 for amplifier 37 and to initiate and terminate a 'data ready' signal.

26

These signals are obtained by decoding the binary counters. The 4-bit counter 48 is needed as some of the required pulses occur outside the measuring interval defined by the 12-bit counter. In addition, there is obtained a signal indicating successful stylus detection in which two and only two pulses are detected.

The resulting signal data is then processed in a suitable computer such as an IBM Series/1 minicomputer connected via a standard 16-bit input port. In order to further assist one skilled in the art example software instructions to execute the operations on the IBM Series 1 are contained in several subroutines. The x-y computations are provided by the following subroutines.

It will be apparent to one skilled in the art that the principles set forth in the subroutines may be called by other programs where the invention is part of a larger application.

27

```
*******************************************************************
    THIS SUBROUTINE FIRST CALLS READXY TO GET X AND Y VALUES
    MEASURED WITH RESPECT TO AN ORIGIN LOCATED AT THE LASER
    SCANNER.  IT THEN SHIFTS THE ORIGIN TO THE TABLET CO-
    ORDINATE SYSTEM, AND CHECKS TO SEE IF THE VALUE IS ON
    THE ACTIVE TABLET AREA OR ON THE AREA RESERVED FOR SOFT
    KEYS.  A RETURN CODE (RCODE) IS SET AS FOLLOWS :-

    -1: NO STYLUS +1: STYLUS ON SOFT KEY: 0: STYLUS ON ACTIVE
    TABLET AREA.  IF A SOFT KEY, ITS VALUE IS RETURNED TO THE
    MAIN (NOT CALLING) PROGRAM IN THE VARIABLE KEY
*******************************************************************
    READXY     PROGRAM     START,MAIN=NO
               SUBROUT     READXY
               ENTRY       READXY
               EXTRN       GETXY,BEEP,ADDCODE,ADDCAL
               EXTRN       KEY,KEYNUM,X,Y,VX,VY,RCODE,ADDX,RETCODE
               EXTRN       XOFFSET,YOFFSET,VSCALE
*******************************************************************
    START      EQU *
               MOVE        KEY,O  O:NOT IN USE +N:SHAPE -N:COMMAND
               MOVE        RCODE,O  +1:SOFTKEY  O:PANEL  -1:NO
                           READING/OFF SCALE
               CALL        GETXY,ADDCODE,ADDCAL,ADDX
               IF          (RETCODE,EQ,O),GOTO,RD2
               MOVE        RCODE,-1
               GOTO        ENDRDPN
    RD2        USER        *+2  CALCULATE TRUE X AND Y IN FLOAT AND FIXED
               FMV         X,FRO
               FS          XOFFSET,FRO     SUBTRACT OFFSET FROM ORIGIN (X)
               FMV         FRO,X
               FMVC        FRO,XI
```

28

```
FMV      Y,FRO
FS       YOFFSET,FRO      SUBTRACT OFFSET FROM ORIGIN (Y)
FMV      FRO,Y
FMVC     FRO,YI
BAL      RETURN,R1
```

```
******************************************************************
     SEE IF ON ACTIVE TABLET AREA.  IF NOT, CALL SORTER TO FIND IF ITS
     A SOFT KEY, AND IF SO, WHICH ONE
******************************************************************
                IF         (X,LT,O,FLOAT),THEN
                     SUB        XI,1
                ENDIF
                IF         (Y,LT,O,FLOAT),THEN
                     SUB        YI,1
                ENDIF
                IF         (XI,GT,XMX),OR,(YI,GT,YMX),OR,
                           (XI,LT,O),OR,(YI,LT,O),THEN
                     CALL SORTER
                ENDIF
     ENDRDPN    EQU *
                IF         (RCODE,EQ,1),THEN
                     CALL   BEEP,HITONE
                ENDIF
                RETURN
```

30

```
****************************************************************
            SUBROUT   SORTER
            IF        (XI,EQ,-1),AND,(YI,GE,O),AND,(YE,LE,11),
                      GOTO,LTEDGE

            IF        (YI,EQ,11),AND,(XI,GE,O),AND,(XI,LE,10),
                      GOTO,TPEDGE
            MOVE      RCODE,-1
            GOTO      ENDSORT
   LTEDGE   MOVE      KEYNUM,YI
            ADD       KEYNUM,YI
            MOVE      #1,KEYNUM
            MOVE      RCODE,1
            GOTO      ENDSORT
   TPEDGE   MOVE      KEYNUM,24
            ADD       KEYNUM,XI
            ADD       KEYNUM,XI
            MOVE      #1,KEYNUM
            MOVE      KEY,(KEYTABL,#1)
            MOVE      RCODE,1
            GOTO      ENDSORT
   ENDSORT  EQU *
            RETURN
```

0083395

31

```
****************************************************************
                   VARIABLES FOR THIS SUBROUTINE
****************************************************************
        NREQ      DC    1F'3'
        NAV       DC    1F'3'
        FPDIV     DC    1E'3.0'
        XAV       DC    1E'0.0'
        YAV       DC    1E'0.0'
        XI        DC    1F'O'
        YI        DC    1F'O'
        XMX       DC    1F'10'
        YMX       DC    1F'10'
        KEYTABL   DC    X'FFFDFFFDFFFDFFFDFFF6FFF7FFF8FFF9FFFA'
                  DC    X'FFFBFFFCFFFE00013000500070009'
                  DC    X'000B0000000000000000000000'
        **  1:AMP  3:RES  5:CAP  7:GND  9:DOT  11:DIODE
        HITONE    DC    X'2000'
                  ENDPROG
                  END
```

32

```
*****************************************************************
         SUBROUTINE TO GET (X,Y) FROM TOUCH PANEL.  XY IS A DRIVER

         PROGRAM FOR THE PANEL HARDWARE.  IT IS CALLED TO GET THE

         RAW CALIBRATION CONSTANTS STORED IN THE PROGRAM WHICH

         CALLED THIS SUBROUTINE.  ADDCAL IS THE ADDRESS OF THESE

         CONSTANTS, WHICH CONSIST OF 4 DOUBLE-PRECISION FLOATING

         POINT NUMBERS FOLLOWED BY A SINGLE PRECISION FLOATING

         POINT NUMBER EQUAL TO TWICE THE TABLET SIDE.  THIS SUB-

         ROUTINE RETURNS X, Y A RETURN CODE AND THE RAW DATA T1 AND

         T2.

         ADDX IS ADDRESS OF X (WHICH MUST BE FOLLOWED BY Y) IN THE

         CALLING PROGRAM, BOTH SINGLE PRECISION FLOATING POINT

         NUMBERS FOLLOWED BY T1 AND T2, EACH SINGLE PRECISION

         INTEGERS

         THE CODE IS O FOR SUCCESS, -1 FOR NO FINGER

         THE CALCULATION IS GIVEN BY:

         X=S.TAN(A2)(1-TAN(A1)/(1-TAN(A1)TAN(A2)), SWAP 1,2 FOR Y

         A1=RR1(1)+T1,RR1(2), A2=RR2(1)+T2.RR2(2). T1,T2 ARE DETECTED

         PULSE CENTRE TIMES RELATIVE TO START PULSE.
*****************************************************************
         GETXY     PROGRAM     START,MAIN=NO,PARM=3

                   SUBROUT     GETXY,ADDCODE,ADDCAL,ADDX

                   ENTRY       GETXY

                   EXTRN       TAN

                   EXTRN       XY

         START     EQU *

                   CALL        AY,(RETCODE)   GET RAW DATA

                   IF          (RETCODE,NE,O),GOTO,ENDGET

***      START BY CONVERTING TIMES TO ANGLES USING CALIBRATION

         CONSTANTS

                   USER        *+2

                   MVW         ADDCAL,R3
```

33

```
        MVD     (R3,32),S   PICK UP S FROM CALLING PGM
        FMVC    T1,FRO
        FMD     (R3,8),FRO
        FAD     (R3),FRO    FRO=RR1(1)+RR1(2)*T1
        FMV     FRO,ANG1    THIS IS FIRST ANGLE
        FMVC    T2,FRO
        FMD     (R3,24),FRO
        FAD     (R3,16),FRO
        FMV     FRO,ANG2
        BAL     RETURN,R1
***  NOW CALCULATE TANGETS
        CALL    TAN,(ANG1),(TAN1)
        CALL    TAN,(ANG2),(TAN2)
        USER    *+2
        MVW     ADDX,R3
        FMV     TAN1,FR1    FR1=TAN1
        FMV     TAN2,FR2    FR2=TAN2
        FMV     FR1,FRO     FRO=TAN1
        FM      FR2,FRO     FRO=TAN1*TAN2
        FS      FP1,FRO     FRO=TAN1*TAN2 -1
        FMV     FR1,FR3     FR3=TAN1
        FS      FPI,FR3     FR3=TAN1 - 1
        FM      FR2,FR3     FR3=TAN2(TAN1 - 1)
        FD      FRO,FR3     FR3 = TAN2(TAN1 - 1)/
                                  (TAN1*TAN2-1)
        FM      S,FR3       FR3=X
        FMV     FR3,(R3)    STORE X IN CALLING PGM
        FMV     FR2,FR3     FR3=TAN2
        FS      FP1,FR3     FR3=TAN2-1
        FM      FR1,FR3     FR3=TAN1(TAN2-1)
        FD      FRO,FR3     FR3=TAN1(TAN2-1)/(TAN1TAN2-1)
        FM      S,FR3       FR3=Y
```

34

```
            FMV       FR3,(R3,4) STORE Y IN CALLING PGM
            BAL       RETURN,R1


ENDGE1      EQU *
            USER      *+2
            MVW       ADDCODE,R3
            MVW       RETCODE,(R3)
            MVW       T1,(R3,2)
            MVW       T2,(R3,4)
            BAL       RETURN,R1
            RETURN
```

**************************************************************************

```
    RETCODE     DC        1F'0'
    T1          DC        1F'0'
    T2          DC        1F'0'
    ANG1        DC        1E'0.0'
    ANG2        DC        1E'0.0'
    TAN1        DC        1E'0.0'
    TAN2        DC        1E'0.0'
    S           DC        1E'29.5'
    FP1         DC        1E'1.0'
                ENDPROG
                END
```

35

```
***********************************************************************
        DRIVER SUBROUTINE TO READ RAW DATA FROM TOUCH PANEL SETS UP

        DIGITAL INPUT UNIT TO INTERRUPT ON HARDWARE LEVEL ZERO, WAITS

        FOR INTERFACE TO GENERATE INTERRUPT.  THEN READS DATA WORDS,

        PROPERLY INTO BINARY WORDS AND PASSES BACK DATA AND RETURN

        CODE TO CALLING PROGRAM ADDCODE IS ADDRESS OF RETURN CODE IN

        CALLING PGM, WHICH MUST BE FOLLOWED BY THE RAW DATA, ALL 2-BYTE

        INTEGERS
***********************************************************************
        XY          PROGRAM START,MAIN=NO,PARM=1

                    SUBROUT XY,ADDCODE

                    ENTRY XY

        START       EQU *

                    USER *+2

                    MVWI O,RETCODE

                    MVA  DBUFF,ADBUFF

                    MVWI 4,DBUFFCNI

                    MVA DOIT,INT   POINT TO FULL INTERRUPT HANDLER

                    BAL READIN,R6

        ***   WILL INVERT BITS TO GET TRUE DATA, TESTING BIT 15 FOR 1 ***

                    MVW1 4,R7

                    MVA DRUFF,R1

        INVLOOP     MVW (R1),R3

                    VR R3

                    TWI X'0001,R3

                    JN C3      JUMP IF THE BIT IS 1 (DATA VALID)

                    MVW1 -1,RETCODE

        C3          SRL 4,R3

                    MVW R3,(R1)+

                    JCT INVLOOP,R7

                    MVW DBUFF,XTIM

                    AW DBUFF +2,XTTM
```

36

```
MVW  ADDCODE,R3
MVA  RETCODE,R1
VMWI 6,R7
MVFN (R1),(R3)
BAL  RETURN,R1
RETURN
```

```
*********************************************************************
        READIN   EQU *
                 MVA   INT,X'F8'  STORE HANDLER ADDRESS IN INTERRUPT TABLE
                 IO    DIRESET    RESET DI JUST IN CASE
                 IO    DIPREP     PREPARE DI TO INTERRUPT ON LEVEL O
                 MVWZ  DIFCB,RO   MARK DI EVENT NOT READY
                 IO    DIARM      ARM EXTERNAL SYNCH
                 BAL   SVC,R7     WAIT FOR INTERRUPT
                 DC    A(WAIT)
                 DC    A(DIECB)
                 B     (R6)       RETURN TO CALLER
*********************************************************************
*****    IMMEDIATE ACTION ROUTINE TO HANDLE INTERRUPT          *****
*****    THE SUPERVISOR WILL START THIS ROUTINE ON LEVEL O     *****
*****    AFTER INTERRUPT, R1 POINTS TO 'INT', R7 HOLDS         *****
*****    DI DEVICE STATUS INFO, OTHER REGISTERS ARE CLEARED    *****
*****    NOTE: THE ADDRESS OF THIS ROUTINE WAS STORED          *****
*****          ABOVE IN 'UNT'                                  *****
*********************************************************************
        DOIT     EQU *
*****    READ 3 WORDS, THEN TEST FLAGS AND DISTRIBUTE          *****
                 IO    DIREAD     READ D1 AND RESET SYNCH
                 MVW   DIDATA,    STORE A WORD IN DBUFF
                       (R1,2)*
                 AWI   2,(R1,2)   BUMP THE BUFFER POINTER
                 SWI   1,(R1,4)   DECREMENT THE BUFFER COUNTER
                 JNP   QUITIT     QUIT AFTER 4 READINGS
                 LEX
        QUITIT   EQU *
                 DIS   1          DISABLE SUMMARY MASK (INHIBIT INTERRUPTS)
                 ID    DIRESET
                 EN    1          ENABLE SUMMARY MASK
```

0083395

38

```
        BAL   SVCT,R7    POST DI EVENT COMPLETE
        DC    A(POST)
        DC    A(DIECB)
        DC    X'FFFF'    POST CODE
        B     SUPEXIT    RETURN TO MAIN PROGRAM
*****     END OF IMMEDIATE ACTION ROUTINE              *****
******************************************************************
        ENDIT    EQU  *
        BAL   RETURN,R1  BACK TO EDX
```

39

```
*****************************************************************
***** DATA SECTION                                        *****
*****************************************************************
       DIPREP    DC    X'60640001'
       DIRESET   DC    X'6F640000'
       DIARM     DC    X'69640000'
       DIREAD    DC    X'0064'   HALF OF IDCB FOR DI
       DIDATA    DC    X'0000'   2ND HALF OF IDCB-DATA APPEARS HERE
***** KEEP THE NEXT 8 VARIABLES TOGETHER                  *****

       DIECB     ECB
       DCINT     DC    A(INT)
       INT       DC    A(DOIT)   ADDRESS OF DI INTERRUPT HANDLER
       ADBUFF    DC    A(DBUFF)  (R1,2)
       DBUFFCNT  DC    F'4'      (R1,4)
       DBUFF     DC    4F'0'     TEMPORARY BUFFER FOR DIDATA
       RETCODE   DC    1F'0'
       XTIM      DC    1F'0'
       YTIM      DC    1F'0'
*****************************************************************
*****      END OF DATA SECTION                             *****
*****************************************************************
```

40

```
********************************************************************
    PROGRAM TO CALCULATE TANGENT.  SINGLE PREC.  FLOATING PT CALC
    ANGLE IN RADIANS STORED AT ANGADD IN MAIN CALLING PGM
    RESULT RETURNED AT RETADD IN CALLING PGM
********************************************************************


    TAN       PROGRAM    START,MAIN=NO,PARM=2
              SUBROUT    TAN,ANGADD,RETADD
              ENTRY      TAN
    START     EQU  *
              USER       *+2
    ***       FIRST TAKE ABSOLUTE VALUE OF ANGLE AND SAVE SIGN ***
              FMV        ANGADD*,FRO
              FMV        FRO,X
              JN         NEG          JUMP IF ANGLE NEGATIVE
              MVD        FPMIN,SIGN    AND STORE SIGN
              J          CONT1
    NEG       MVD        FPMIN,SIGN    STORE SIGN
              FMV        FRO,X
              RBTWI      X'8000',X     RESET THE SIGN BIT
              FMV        X,FRO
***** NEXT DIVIDE BY PI/4 AND SEPARATE INTO INTEGER AND FRACTION *****
    CONT1     EQU  *     FRO NOW HOLDS ABSOLUTE VALUE OF ANGLE
              FD         PI4,FRO       DIVIDE BY PI OVER 4
              FMVC       FRO,Q         STORE INTEGER PART
              FMVC       Q,FR2         CONVERT BACK TO FLOATING POINT
              FS         FR2,FRO       FRO CONTAINS FRACTIONAL PART
                                       (R)
**** NEED TO KNOW IF Q IS EVEN OR ODD--CHECK LAST BIT        *****
**** IF EVEN, W=R.  IF ODD, W=1-R  WILL LEAVE W IN FRO       *****
    TWI  X'0001',Q                     TEST BIT 15 in Q
              JZ         EVEN          JUMP IF EVEN
```

41

```
            FMV       FP1,FR3        FR3=1
            FS        FRO,FR3        FR3=1-R
            FMV       FR3,FRO        STORE BACK IN FRO, CALL THIS W
     EVEN   EQU  *                   EVEN, LEAVE FRO ALONE
****        COMPUTE U=0.5W**2, LEAVE IN FR1                  *****
            FMV       FRO,FR1        WILL FORM U=0.5W**2
            FM        FRO,FR1
            FM        FPHF,FR1       FR2 HOLDS U
****        COMPUTE WP(U)=W(A+U),    LEAVE IN FR2
            FMV       FR1,FR2        FR2 HOLDS U ALSO
            FA        A,FR2          ADD A TO FORM PU
            FM        FRO,FR2        FR2 HOLDS W*PU
****        COMPUTE Q(U)=B+CU++DU**2, LEAVE IN FR3           *****
            FMV       FR1,FR3        FR3=U
            FM D,  FR3               FR3=DU
            FA        O,FR3          FR3=C+DU
            FM        FR1,FR3        FR3=CU+DU**2
            FA        B,FR3          FR3=B+CU+DU**2=QU(U)
****        NOW NEED Q MODULU 4                              *****
            MVW       Q,R5           PICK UP Q
            MVW       R5,R6          COPY INTO R6 ALSO
            SRL       2,R5           DIVIDE BY 4 (SHIFT RIGHT 2)
            SLL       2,R5           MULTIPLY BY 4 (SHIFT LIFT 2)
            SW        R5,R6          SUBTRACT FROM ORIGINAL
            MVW       R6,DO          STORE (O MOD 4)
            SLL       1,R6           DOUBLE Q
**** DIFFERENT ROUTINES FOR QO=O,1,2,3.  SELECT BY A BRANCH TABLE*****
**** O:TANX  1:COTX*  2:COTX  3:-TANX
            MVA       TABLE,R3
            AW        R6,R3
            B         (R3)*
     RTEO   FD        FR3,FR2        TAN=WP/Q
```

42

```
          FM       SIGN,FR2

          FMV      FR2,RES

          J        CONT2

RTE1      FD       FR2,FR3        COT=Q/WP

          FM       SIGN, FR3

          FMV      FR3,RES

          J        CONT2

RTE2      FD       FR2,FR3        COT=Q/WP

          FM       FPMIN,FR3      MULTIPLY BY -1

          FM       SIGN,FR3

          FMV      FR3,RES

RTE3      FD       FR3,FR2        TAN=WP/Q

          FM       FPMIN,FR2

          FM       SIGN,FR2

          FMV      FR2,RES

CONT2     EQU  *                 OK, ESCEPT FOR POSSIBLE SIGN

          MVW      RETADD,R3      ADDRESS TO RETURN RESULT

          MVD      RES,(R3)

          BAL      RETURN,R1

          RETURN
```

43

```
******************************************************************
        X      DC    1E'0.0'         ABSOLUTE VALUE OF ANGLE
        P14    DC    1E'0.7853981634' PI/4
        Q      DC    1E'0'           INTEGER PART OF ANGLE/P14
        R      DC    1E'0.0'         FRACTIONAL PART OF ABOVE
        QO     DC    1E'0'           Q MODULO 4
        W      DC    1E'0.0'         REDUCED ARGUMENT
        U      DC    1E'0.0'         0.5W**2
        FP1    DC    1E'1.0'
        FPHF   DC    1E'0.5'
        FPMIN  DC    1E'-1.0'
        A      DC    1E'-8.460901'
        B      DC    1E'-10.772754'
        C      DC    1E.5.703366'
        D      DC    1E'-0.159321'
        PU     DC    1E'0.0'         A+U
        QU     DC    1E'0.0'         B+CU+DU**2
        RES    DC    1E'0'           TANGENT OF ANGLE
        SIGN   DC    1E'1.0'         SIGN OF ANGLE (1 OR -1)
        TABLE  DC    A(RTEO)
               DC    A(RTE1)
               DC    A(RTE2)
               DC    A(RTE3)
               ENDPROG
               END
```

44

\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*

These subroutines return the x and y co-ordinates of the stylus. The device of the invention is referred to in the program as the "tablet". The subroutines perform the following general functions:-

1    DATA ACQUISITION

This routine is highly specific to the computer hardware and to the interface circuitry. It causes the transfer of the four digital numbers representing the stylus pulse edges into main storage. The left and right edges of each pulse are then averaged to obtain an estimate of the pulse centre.

2    ANGLE CONVERSION

As discussed, the co-ordinates may be calculated in terms of two angles, $A_x$ and $A_y$. These angles are proportional to representative digital numbers, $N_x$ and $N_y$ representing the pulse centres so that the angles may be expressed as shown in equations 17 and 18.

$$\text{Equation 17} \quad A_x = C_1 + C_2 N_x$$

$$\text{Equation 18} \quad A_y = C_3 + C_4 N_y$$

The constants $C_1$--$C_4$ depend on the location of the phototransistors 22 and 23. They are obtained by a simple calibration procedure when the system is first assembled. The values are obtained as single-precision floating point numbers, stored and retrieved when the subroutine is first loaded into storage.  Thereafter, the integers $N_x$ and $N_y$ are converted to floating point representation and $A_x$, $A_y$ obtained from equations 17 and 18 above as floating point numbers.

3    STYLUS CO-ORDINATES

These are calculated using equations 3 and 4.  The tangent functions are evaluated using a standard numerical approximation.  All calculations are done using single-precision floating point arithmetic with 24-bit binary fractions.  The value of S is obtained by direct measurement of the area dimensions.

In these subroutines, each routine has functional statements.  The manual to data processing interface of the invention is referred to as the tablet.  The regions of the operating surface that are set aside for communication functional purposes are called soft keys.  If the stylus is detected in one of the soft key regions, it is recognised as not having a valid x-y co-ordinate.  The program involves three subroutines called XY, GETXY, TAN and READXY and operate as follows :

XY reads raw data from the tablet.  The numbers are basically the times at which the finger was detected relative to a timing mark.  The program GETXY first converts these times into angles, and performs a trigonometric calculation to compute x-y co-ordinates.  The subroutine TAN computes tangents for this calculation.  The x-y co-ordinates so computed have their origin located at the scanning mirror, which is outside the actual tablet.  These programs are completely specific to the particular example tablet under discussion, and would have to be entirely changed if some other device were used.

46

READXY then takes the X-Y values from GETXY and adjusts the values so that X=0, Y=0 correspond to the lower left-hand corner of the actual tablet. It then checks to see if the values are on the main part of the tablet or on the edges which correspond to "soft-keys".

The following subroutines illustrate the steps in providing retention, display and erase capabilities.

```
****************************************************************
          SINGLE-FINGER OPERATION OF TABLET + DISPLAY
****************************************************************


TAPIT      PROGRAM     START,20,DS=(TOUCHDAT,SHAPES)
           EXTRN       FIFOPU,FIFOPOP,DRAWLINE,MARKELINE,CONNECT
           EXTRN       FINGER,PLOTTER,GRIDI,READXY,SKETCH,PUTSHAPE
           ENTRY       X,Y,X1,X2,Y1,Y2,VX,VY,OLDVX,OLDVY
           ENTRY       XOFFSET,YOFFSET,VSCALE,VIDEO
           ENTRY       NDOTS,ADDCAL,ADDCODE,ADDX
           ENTRY       KEY,XFIFO,YFIFO,PENDING,TWIST,DS2,ROTATE
           ENTRY       RETCODE,RCODE,KEY,KEYNUM,TIMEDEL,NDEL
           ENTRY       WRITHRU,WRITHRU1,BEAMON,BEAMOFF,DODATA
           ENTRY       HITONE,LOTONE,VOLT4,VOLT6,DELAY1,PICKED
           ENTRY       DRAWING,CANCEL,ENTER,POLY,WRTCHNTRL,STOPPER
           ENTRY       HOLDER,LENGTH,NUMBER,LIMIT,POINT
           ENTRY       $SENSRIO,VSBUFF,VYBUFF,DSKPNT
*          IODEF       AO1,ADDRESS=63,POINT=0
*          IODEF       AO2,ADDRESS=63,POINT=1
*          IODEF       A16,ADDRESS=62,POINT=6
*          IODEF       A14.ADDRESS=62,POINT=4
           ATTNLIST    ($SPF1,RUN,$PF5,QUIT)
RUN        IF (HOLDER,EQ,I),THEN
               MOVE    HOLDER,O
```

47

```
          POST    RUNEVNT
      ELSE
          MOVE    HOLDER,1
      ENDIF
      ENDATTN
QUIT      IF   (LOOPING,EQ,O),THEN
          GOTO    QUITIT
      ELSE
          MOVE    STOPPER,1
      ENDIF
      ENDATTN
START     EQU   *
          CALL    CLEARIT
          .CALL   MSG
          READ    DS1,DISKBUFF,1,1,END=DERR,ERROR=DERR,WAIT=YES
          MOVE    RRI,DISKBUFF,(36,BYTE)
          GOTO    START1
DERR      ENQT    VIDEO
          PRINTEXT 'DISK ERROR OCCURRED',LINE=O,SPACES=O
          DEQT
          GOTO    QUITIT
START1    CALL    BLANKER
          WAIT    RUNEVNT,RESET
          MOVE    LOOPING,1
          ENQT    VIDEO
          PRINTEXT 'RUNNING',LINE=22,SPACES=73
          DEQT
AGAIN     EQU   *
          IF      (STOPPER,EQ,1),GOTO,QUITIT
          IF      (HOLDER,EQ,1),THEN
            MOVE  LOOPING,O
            ENQT  VIDEO
```

48

```
        PRINTEXT 'HOLDING',LINE=22,SPACES=73
        DEQT
        GOTO    START1
    ENDIF
    CALL     FINGER1
    CALL     BLANKER
    IF       (RCODE,EQ,O),THEN
      CALL   PLOTTER,1
      CALL   FIFOPUSH,(X),(Y),(XFIFO),YF1FO)
          ENDIF
    ELSE
          GOTO TESTKEY
    ENDIF
    IF       (PENDING,EQ,O),THEN
          GOTO AGAIN
    ELSE
          MOVE KEY,PENDING
    ENDIF
TESTKEY  ENQT    VIDEO
          PRINTEXT 'SOFTKEY NUMBER',LINE=3,SPACES=O
          PRINTNUM  KEY,LINE=3,SPACES=15
    DEQT
    IF   (KEY,EQ,LINE1),THEN
          CALL MAKELINE
    ENDIF
    IF   (KEY,EQ,LINE2),THEN
          CALL CONNECT
    ENDIF
    IF   (KEY,EQ,CANCEL),THEN
          MOVE PENDING,O
          MOVE ROTATE,1
    ENDIF
```

49

```
IF    (KEY,EQ,DRAW),THEN
          MOVE DRAWING,O
          CALL SKETCH
ENDIF
IF    (KEY,EQ,DRAW1),THEN
          MOVE DRAWING,1
          CALL SKETCH
ENDIF
IF    (KEY,EQ,CLR),THEN
          MOVE NUMBER,O,(3,WORD)
ENDIF
IF    (KEY,GT,O),OR,(KEY,EQ,TWIST),THEN
          MOVE DSKPNT,KEY
          CALL PUTSHAPE
ENDIF
GOTO AGAIN
QUITIT    CALL CLEARIT
PROGSTOP
```

50

```
*********************************************************************
          SUBROUT    BLANKER
          ENTRY      BLANKER
          MOVE       DODATA,BEAMOFF
          SBIO       DOI,BEAMOFF
          RETURN
*********************************************************************
          SUBROUT    MSG
          ENQT       VIDEO
          PRINTEXT   PFMSG,LINE=23,SPACES=0
          PRINTEXT   'HOLDING',LINE=22,SPACES=73
          DEQT
          RETURN
*********************************************************************
          SUBROUT    CLEARIT
          ENQT       VIDEO
          ERASE      1920,TYPE=ALL,MODE=SCREEN
          DEQT
          RETURN
*********************************************************************
          SUBROUT    BEEP,TONE
          ENTRY      BEEP
          USER *+2
          OW         TONE,DODATA    TURN ON BIT 02 OR BIT 03 (02=HITONE)
          IO         DOOUT
          RBTW       TONE,DODATA    TURN OFF BIT 02 OR 03 (03=LOTONE)
          IO         DOOUT
          BAL        RETURN,R1
          RETURN
```

```
********************************************************************
VIDEO      IOCB $SYSLOG,SCREEN=STATIC,TOPM=0,BOTM=23
PFMSG      TEXT 'PF1:RUN/HOLD         PF:END'
ADDCAL     DC   A(RR1)
ADDX       DC   A(X)
ADDCODE    DC   A(RETCODE)
**KEEP NEXT 10 TOGETHER**
RETCODE    DC   1F'0'
T1         DC   1F'0'
T2         DC   1F'0'
X          DC   1E'0.0'
Y          DC   1E'0.0'
KEY        DC   1F'-1'
KEYNUM     DC   1F'0'
RCODE      DC   1F'0'
VX         DC   1F'0'
VY         DC   1F'0'
**KEEP NEXT 3 TOGETHER**
RR1        DC   2L'0.0'
RR2        DC   2L'0.0'
S          DC   1E'29.5'
**KEEP NEXT 7 TOGETHER**
X1         DC   1E'0.0'
X2         DC   1E'0.0'
Y1         DC   1E'0.0'
Y2         DC   1E'0.0'
XOFFSET    DC   1E'2.0'
YOFFSET    DC   1E'1.0'
VSCALE     DC   1E'2909.1'
************************
DISKBUFF   BUFFER    256,BYTES
VXBUFF     BUFFER    256,BYTES
VYBUFF     BUFFER    256,BYTES
```

```
OLDVX     DC    1F'0'
OLDVY     DC    1F'0'
VXX       DC    1F'0'
VYY       DC    1F'0'
STOPPER   DC    1F'0'
GRIDDER   DC    1F'0'
FRAMER    DC    1F'0'
LOOPING   DC    1F'0'
HOLDER    DC    1F'0'
XO        DC    1E'-0.1'
YO        DC    1E'-0.1'
INC       DC    1E'0.1'
*XLAST    DC    1E'0.0'
*YLAST    DC    1E'0.0'
NDOTS     DC    1F'100'
POLY      DC    1F'0'
FP1       DC    1E'1.0'
XINC      DC    1E'0.0'
YINC      DC    1E'0.0'
BEAMON    DC    X'8000'
BEAMOFF   DC    X'0000'
WRTTHRU   DC    X'40000'
WRTTRU1   DC    X'C000'
DOOUT     DC    X'4865'
DODATA    DC    X'0000'
TIMEDEL   DC    1F'0'
NDEL      DC    1F'5'
VOLT4     DC    1F'0'
VOLT5     DC    1F'0'
VOLT6     DC    1F'0'
VOLT7     DC    1F'0'
WRTCNTRL  DC    1F'1'      1 MEANS NORMAL WRITE
```

```
DELAY       DC    1F'1000'
DELAY1      DC    1F'400'
*LNGTH      DC    1E'0.0'
*1FLAG      DC    1F'0'
*DL         DC    1E'0.02'
PICKED      DC    1F'0'
PEN         DC    1F'0'
DOWN        DC    1F'1'
UP          DC    1F'0'
LOTONE      DC    X'1000'
HITONE      DC    X'2000'
XI          DC    1F'0'
YI          DC    1F'0'
NSHP        DC    1F'0'
XSHP        DC    1F'0'
YSHP        DC    1F'0'
ROTATE      DC    1F'1'
DRAWCTRL    DC    1F'0'      1 MEANS REQUITE PUSHBUTTON TO DRAW
DRAWING     DC    1F'1'      1 MEANS IN DRAWING MODE
DSKPNT      DC    1F'1'
CANCEL      DC    1F'-2'     CANCEL PREVIOUS FUNCTION
ENTER       DC    1F'-3'
TWIST       DC    1F'-4'     ROTATE +90
LINE1       DC    1F'-5'     LINES
LINE2       DC    1F'-6'     CONNECT ALL DOTS IN STACK
GRD         DC    1F'-7'     GRID
CLR         DC    1F'-8'     CLEAR STACK
DRAW        DC    1F'-9'     DODDLE
DRAW1       DC    1F'-10'    DRAW
ORGNX       DC    1F'0'
ORGNY       DC    1F'0'
SCALEX      DC    1F'1'
```

54

```
SCALEY    DC    1F'1'
XSHIFT    DC    1F'0'
YSHIFT    DC    1F'0'
SCALR     DC    1F'2700'
FLIPPER   DC    1F'0'
DUMP      DC    1F'1'
XFIFO     DC    16E'0.0'
YFIFO     DC    16E'0.0'
LENGTH    DC    1F'64'
LIMIT     DC    1F'60'
NUMBER    DC    1F'0'
POINT     DC    1F'0'
PENDING   DC    1F'0'
          ENDPROG
          END
```

55

```
CONNECT    PROGRAM    MAIN=NO
           SUBROUT    CONNECT
           ENTRY      CONNECT
           EXTRN      FIFOPOP,DRAWLINE
           EXTRN      NUMBER,X1,X2,Y1,Y2,PENDING,XFIFO,YFIFO
           IF         (NUMBER,GE,8), THEN
               CALL FIFOPOP,(X1),(Y1),(XFIFO),YFIFO)
               DO    UNTIL,(NUMBER,EQ,O)
                       CALL      FIFOPOP,(X2),(Y2),(XFIFO),(YFIFO)
                       CALL      DRAWLINE
                       MOVE      X1,X2,(1,FLOAT)
                       MOVE      Y1,Y2,(1,FLOAT)
               ENDDO
           ENDIF
           MOVE PENDING,O
           RETURN
           ENDPROG
           END



MAKELINE   PROGRAM    MAIN=NO
           SUBROUT    MAKELINE
           ENTRY      MAKELINE
           EXTRN      FIFOPOP,DRAWLINE,DELAY1
           IF         (NUMBER,LT,8),THEN
               MOVE PENDING,KEY
           ELSE
               CALL FIFOPOP,(X1),(Y1),(XFIFO),(YFIFO)
               CALL FIFOPOP,(X2),(Y2),(XFIFO),(YFIFO)
               CALL DRAWLINE
               STIMER DELAY1,WAIT
```

56

```
ENDIF
RETURN
ENDPROG
END
```

```
*****      DRAW A LINE FROM (X1,Y1), TO (X2,Y2)  *****
DRAWLINE   PROGRAM   MAIN=NO
           SUBROUT   DRAWLINE
           ENTRY     DRAWLINE
           ENTRY     DL
           EXTRN     ROUT,PLUTTER
           EXTRN     X,Y,X1,X2,Y1,Y2
           USER      *+2        FIRST COMPUTE LINE LENGTH
           FMV       X1,FR0
           FS        X2,FR0
           FM        FR0,FR0    DX**2
           FMV       Y1,FR1
           FS        Y2,FR1
           FM        FR1,FR1    DY**2
           FA        FR0,FR1
           FMV       FR1,LNGTH
           BAL       RETURN,R1
           CALL      ROOT,(LNGTH),(IFLAG)
           USER      *+2
           FMV       LNGTH,FR0  NOW COMPUTE NUMBER OF SEGMENTS
           FD        DL,FR0     AND INGREMENTS
           FMVC      FR0,NDOTS  NUMBER OF DOTS IN LINE
           FS        FP1,FR0    FR0=NDOTS-1=NSEGMENTS
           FMV       X2,FR1     FR1=X2
           FX        X1,FR1     FR1=X2-X1
           FD        FR0,FR1    FR1=(X2-1)/NSEGMENTS
           FMV       FR1,XINC   STORE X INCREMENT
           FMV       X1,FR2     FR2=X1
           FMV       FR2,X      STARTING X COORDINATE
           FMV       Y2,FR1     FR1=Y2-Y1
           FD        FR0,FR1    FR1=(Y2-Y1)/NSEGMENTS
           FMV       FR1,YINC   STORE Y INCREMENT
```

58

```
        FMV       Y1,FR2     FR2=Y1
        FMV       FR2,Y      STARTING Y COORDINATE
        BAL       RETURN,R1
        DO        NDOTS,TIMES
        CALL      PLUTTER,1
        USER      *+2
        FMV       X,FRO      FRO=X
        FA        XINC,FRO   FRO=X+XINC
        FMV       FRO,X      STORE INCREMENTED X VALUE
        FMV       Y,FR1      FR1=Y
        FA        YINC,FR1   FR1=Y+YINC
        FMV       FR1,Y      STORE INCREMENTED Y VALUE
        BAL       RETURN,R1
        ENDDO
        RETURN
XINC    DC        1E'0.0'
YINC    DC        1E'0.0'
FPI     DC        1E'1.0'
LNGTH   DC        1E'0.0'
IFLAG   DC        1F'0'
DL      DC        1E'0.02'
NDOTS   DC        1F'0'
        ENDPROG
        END
```

59

```
**** PUSH A FLOATING NUMBER ONTO A CIRCULAR FIFO STACK ****
FIFOPOP   PROGRAM   MAIN=NO
          SUBROUT   FIFOPOP,ADDX,ADDY,ADDXSTAK,ADDYSTAK
          ENTRY     FIFOPOP
          EXTRN     POINT,NUMBER,LENGTH,LIMIT
START     USER *+2
          MVW       NUMBER,R1       TEST FOR EMPTY STACK
          JZ        POPEXIT         QUIT IF EMPTY
          MVW       ADDXSTAK,R1     XSTACK ADDRESS
          AW        POINT,R1        POINTER TO DATA WORD
          MVD       (R1),ADDX*
          MVW       ADDYSTAK,R3
          AW        POINT,R3
          MVD       (R3),ADDY*
          SW1       4,NUMBER        REDUCE NUMBER BY 1
          AW1       4,POINT         RESET POINTER
          CW        LIMIT,POINT     CHECK FOR WRAP
          JNP       POPEXIT
          MVW1      O,POINT
POPEXIT   BAL       RETURN,R1
          RETURN
*********************************************************************
          ENDPROG
          END
```

60

```
*****      PUSH A FLOATING NUMBER PAIR ONTO CIRCULAR FIFO STACKS ****
*****      CALL FIFOPUSH,(X),(Y),(XSTACK),YSTACK)
FIFOPUSH   PROGRAM    MAIN=NO
           SUBROUT    FIFOPUSH,ADDX,ADDY,ADDXSTAK,ADDYSTAK
           ENTRY      FIFOPUSH
           EXTRN      POINT,NUMBER,LENGTH,LIMIT
START      USER       *+2
           CW         LENGTH,NUMBER  CHECK FOR FULL STACK
           JNN        PUSHEXIT       DON'T PUSH IF STACK FULL
           MVW        POINT,R1       LOCATION OF FIRST WORD (IN BYTES)
           AW         NUMBER,R1      NUMBER OF BYTES IN STACK
           CW         LIMIT,R1       CHECK FOR WRAPARAOUND
           JNP        NDWRAP
           SW         LENGTH,R1
NOWRAP     MVW        R1,R3
           AW         ADDXSTAK,R1    POINT TO STACK ADDRESS
           MVD        ADDX*,(R1)
           AW         ADDYSTAK,R3
           MVD        ADDY*,(R3)
           AW1        4,NUMBER       BUMP NUMBER
PUSHEXIT   BAL        RETURN,R1
           RETURN
*******************************************************************
           ENDPROG
           END
```

```
SKETCH    PROGRAM    MAIN=NO

          SUBROUT    SKETCH

          ENTRY      SKETCH

          EXTRN      READXY,PLUTTER,&SENSRIU

          EXTRN      HOLDER,STOPPER,RCODE,DRAWING,KEY,CANCEL

          IODEF      A16,ADDRESS=62,POINT=6

START     CALL       READXY

          IF         (HOLDER,EQ,1),OR,(STOPPER,EQ,1),THEN

          RETURN

          ENDIF

          IF         (RCODE,EQ,O),THEN

          IF         (DRAWING,EQ,O),THEN

          CALL       PLOTTER,1

          GOTO       START

          ELSE

          SBIO       A16,VDLT6

          IF         (VDLT6,GT,10000),THEN

          CALL PLOTTER,1

          GOTO       START

          ELSE

          CALL       PLOTTER,0

          GOTO       START

          ENDIF

          ENDIF

          ENDIF

          IF         (KEY,EQ,CANCEL),THEN

          RETURN

          ELSE

          GOTO START

          ENDIF
```

62

```
******************************************************************
VDLT6       DC         1F'0'
            ENDPROG
            END
```

```
*********************************************************************
***PLOT AN X,Y POINT ON A TEKTRONIX 611 SCOPE. X,Y FLOATING PT ***
***IF MODE IS O, PLOTS IN WRITE-THROUGH MODE
*********************************************************************
PLOTTER    PROGRAM    MAIN=NO
           SUBROUT    PLOTTER,MODE
           ENTRY      PLOTTER
           EXTRN      $AWNAE10,BEAMON,BEAMOFF,DODATA
           EXTRN      X,Y,VX,VY,VSCALE,TIMEDEL,WRTTHRU,WRTTHRU1
           IDDEF      AD1,ADDRESS=63,POINT=0
           IDDEF      AD2,ADDRESS=63,POINT=1
           IDDEF      DO1,TYPE=GROUP,ADDRESS=65
START      EQU   *
           USER       *+2         SCALE X AND Y TO DRIVE A/D CONVERTORS
           FMV        X,FRO
           FM         VSCALE,FRO    SCALING FOR TEKTRONIX 611 SCOPE
           FMVC       FRO,VY
           BAL        RETURN,R1
           SBIU       AD1,VX
           SBIU       AD2,VY
           IF         (MDDE,EQ,O),GOTO,NOWRT)
           SBIU       DO1,BEAMOFF
           GOTO       ENDPLT
NOWRT      EQU   *
           SBIU       DO1,WRTTHRO
           SBIO       DO1,WRTTHRU1
           MOVE       DODATA,WRTTHRU1
ENDPLT     RETURN
*********************************************************************
           ENDPROG
           END
```

64

```
         *****PROGRAM TO COMPUTE SQUARE ROOTS, USING METHOD DESCRIBED
IN*****
*****PUBLICATION 360S-LM-501 (IBM SYSTEM/360 FOR TRANIV LIBRARY)****
*****JAMES L LEVINE 11/16/79. TO USE CALL ROOT,(X),(1FLAG)       *****
*****VARIABLES IN MAIN:  X DC E'O'O', 1FLAG DC F'O'              *****
*****NOTE: ROOT APPEARS IN VARIABLE IN WHICH ARGUMENT WAS STORED****
*****IF INPUT IS NEGATIVE, ETS 1FLAG=-1 IN MAIN AND COMPUTES ROOT***
*****OF ABSOLUTE VALUE, OTHERWISE, 1FLAG SET TO O. CODE IS REUSABLE*
ROOT      PROGRAM START, PARM=1,MAIN=NO
          SUBROOT      ROOT,ADDX,ADDI
          ENTRY        ROOT
START     USER *+2
*****WANT TO LIMIT MANTISAA TO RANGE 1/16/--1                   *****
*****FIRST DEAL WITH EXPONENT. WANT TO DIVIDE IT IN HALF, AND   *****
*****NOTE IF WAS ODD. IF SO, FINAL RESULT MUST BE MULTIPLIED BY 4***
          MVW  ADDI,R1   POINT TO 1FLAG IN CALLER
          MVWI O,(R1)    INITIALIZE TO O
          MVW  ADDX,RO   RO POINTS TO DATA IN CALLING PGM
          TBTR (RO,O)    CLEAR BIT I IF ON (ABSOLUTE VALUE OF X)
          JZ   CONT      JUMP IF X WAS POSITIVE
          MVWI -1,(R1)   SET IMAGINARY FLAG IF X NEGATIVE
CONT      MVB  (RO),TEMP+1 PICK UP EXPONENT
          MVD  TEMP,R3   STORE IN REGISTER PAIR R3-R4
          SW1  64,R3     REMOVE OFFSET
          SRLD 1,R3      DIVIDE BY TWO, LOW ORDER BIT TO R4
          AW1  64,R3     REPLACE OFFSET
*****R3 CONTAINS NEW EXPONENT, R4 IS NON-ZERO IF ORIGINAL WAS ODD***
*****DON'T TAMPER WITH R3,R4                                    *****
```

0083395

65.

```
*****NOW MUST GET SQUARE ROOT OF MANTISSA                          *****
         MVB  B40,(RO)   MAKES NUMBER LOOK AS IF IN RANGE 1/16--1
*****COMPUTE INITIAL APPROXIMATION Y1 = A + B/(c + X)              *****
         FMV  (RO),FRO   FRO=X
         FMV  FO,FR3
         FC   FRO,FR3    COMPARE WITH O
         JZ   DONE       QUIT NOW IF O
         FA   C,FRO      FRO = C + X
         FMV  B,FR1      FR1 = B
         FD   FRO,FR1    FR1 = B/(C + X)
         FA   A,FR1      FR1 = YN
*****NOW REFINE BY TWO PASSES OF NEWTON-RAPHSON ITERATION          *****
         MVW1 2,R7
LOOP     FMV  (RO),FRO   FRO = X
         FD   FR1,FRO    FRO = X/YN
         FA   FRO,FR1    FR1 CONTAINS YN + 1/YN
         FM   FHALF,FR1  FR1 = YN+1
         JCT  LOOP,R7
         FMV  FR1,(RO)   PLACE RESULT BACK IN X
         MVB  R3,(RO)    INSERT NEW EXPONENT
         CWI  6,R4       SEE IF ORIGINAL EXPONENT WAS ODD
         JZ   DONE       FINISHED IF EVEN
         FMV  (RO),FRO   ELSE MUST
         FM   F4,FRO     MULTIPLY BY 4
         FMV  FRO,(RO)   AND STORE IT
DONE     EQU  *
         BAL  RETURN,R1
         RETURN

TEMP     DC   2F'0'
FO       DC   E'0.0'
F4       DC   E'4.0'
```

66 . .

```
FHALF     DC    E'0.5'
A         DC    E.'1.681595'
B         DC    E.'1.288973'
C         DC    E'0.8408065'
B40       DC    X'4040'
          ENDPROG
          END
```

```
*******************************************************************
PUTSHAPE   PROGRAM   MAIN=NO
           SUBROUT   PUTSHAPE
           ENTRY     PUTSHAPE
           EXTRN     FIFOPOP,NUMBER,$SENSRIO,VIDEO
           EXTRN     ROTATE,DS2,VXBUFF,VYBUFF,DSKPNT,FSCALE
           EXTRN     PENDING,KEY,CANCEL,XFIFO,YFIFO,TWIST
           EXTRN     NDEL,TIMEDEL,BEAMON,BEAMOFF,WRTTHRU,DODATA
           IODEF     AO1,ADDRESS=63,POINT=O
           IODEF     AO2,ADDRESS=63,POINT=1
           IODEF     DO1,TYPE=GROUP,ADDRESS=65
           IF        (KEY,EQ,TWIST),THEN
           ADD       ROTATE,1
           IF        (ROTATE,GT,4),THEN
           MOVE      ROTATE,1
           ENDIF
           STIMER    DELAY2,WAIT
           RETURN
           ENDIF
           IF        (NUMBER,EQ,O),THEN
           MOVE      PENDING,KEY
           RETURN
           ENDIF
           READ      DS2,VXBUFF,1,DSKPNT,END=DERR,ERROR=DERR
           ADD       DSKPNT,1
           READ      DS2,VYBUFF,1,DSKPNT,END=DERR,ERROR=DERR
           SUB       DSKPNT,1
           CALL      FIFOPOP,(X),(Y),(XFIFO),(YFIFO)
           FMULT     X,VSCALE
           FPCONV    XSHP,X,PREC=SF
           FMULT     Y,VSCALE
           FPCONV    YSHP,Y,PREC=SF
```

```
          MOVE     NSHP,VXBUFF FIRST WORD OF BUFFER IS NUMBER OF PTS
          MOVE     #1,2
          DO       NSHP,TIMES
          GOTO     (NOPLT,ROTO,ROT90,ROT180,ROT270),ROTATE
ROTO      ADD      (VXBUFF,#1),XSHP,RESULT=VXX
          ADD      (VYBUFF,#1),YSHP,RESULT=VYY
          GOTO     PLTIT
ROT90     SUB      XSHP,(VYBUFF,#1),RESULT=VXX
          ADD      (VXBUFF,#1),YSHP,RESULT=VYY
          GOTO     PLTIT
ROT180    SUB      XSHP,(VXBUFF,#1),RESULT=VXX
          SUB      YSHP,(VYBUFF,#1),RESULT=VYY
          GOTO     PLTIT
ROT270    ADD      XSHP,(VYBUFF,#1),RESULT=VXX
          SUB      YSHP,(VXBUFF,#1),RESULT=VYY
PLTIT     SB10     AD1,VXX
          SB10     AO2,VYY
          DO       NDEL,TIMES
          ADD      TIMEDEL,O
          ENDDO
          SB10     DO1,BEAMON
          ADD      #1,2
          SB10     DO1,BEAMOFF

          MOVE     DODATA,BEAMOFF
          ENDDO
          SUB10    DO1,WRTTHRU
          SUB10    DO1,BEAMOFF
          MOVE     DODATA,BEAMOFF
          MOVE     ROTATE,1
          MOVE     PENDING,O
NOPLT     RETURN
```

```
DERR        ENQT      VIDEO
            PRINTEXT  'DISK ERROR OCCURRED',LINE=0,SPACES=0
            DEQT
            RETURN
*******************************************************************
X           DC        1E'0.0'
Y           DC        1E'0.0'
NSHP        DC        1F'O'
XSHP        DC        1F'O'
YSHP        DC        1F'O'
VXX         DC        1F'O'
VYY         DC        1F'O'
DELAY2      DC        1F'400'
            ENDPROG
            END
```

```
*****    WRITES A GRID ON THE SCREEN.   CALL GRID
GRIDI    PROGRAM    START,MAIN=NO
         SUBROOT    GRIDI
         ENTRY      GRIDI
         EXTRN      DRAWLINE,XI,X2,Y1,Y2,DL
START    MOVE       DLDDL,DL,(1,FLOAT)
         MOVE       DL,DLTEMP,(!,FLOAT)
         MOVE       X1,0,(1,FLOAT)
         MOVE       X2,11,(1,FLOAT)
         MOVE       Y1,0,(2,FLOAT)
         DO         12,TIMES
         CALL       DRAWLINE
         FADD       Y1,1
         FADD       Y2,1
         ENDDO
         MOVE       X1,0,(",FLOAT)
         MOVE       Y1,0,(1,FLOAT)
         MOVE       Y2,11,(1,FLOAT)
         DO         12, TIMES
         CALL       DRAWLINE
         FADD       X1,1
         FADD       X2,1
         ENDDO
         MOVE       DL,OLDDL,(1,FLOAT)
         RETURN
DLDDL    DC         1E'0.02'
DLTEMP   DC         1E'0.11'
         ENDPROG
         END
```

71

The example system under discussion exhibits an accuracy of about 0.254mm (0.01 inches) when used with styli of various diameters and tip-shapes. These include pencils, the index fingers of the user, 6.35mm (0.25 inch) diameter discs, etc. A typical user is able to select a point with about 1.27mm (0.05 inch) accuracy using their fingers, despite being unable to see the actual point of contact once the finger is close to the surface. This indicates the ability of the device to find the centre of the large-diameter finger with precision. Greater resolution is achieved where the system, as shown in Fig.5, is positioned in the optical path between a user and a display so that immediate visual feedback is provided.

If a stylus with a small tip is used, points can be entered without visual feedback to an accuracy of about 0.254mm (0.01 inches). The stylus should be held perpendicular to the surface. Alternatively, a round optical comparator with a simple cross-hair can be placed on the surface for use in entering points.

The invention provides some 'human factors' considerations. The optical system senses the stylus position a small distance above the surface. As a result, it is moderately sensitive to the tilt of the stylus. This can lead to reduced accuracy if the system is operated without immediate visual feedback via a display of already entered data. When such feedback is presented, a user can easily make very precise adjustments by rocking a finger or other stylus slightly in the desired direction.

The manner of detection of the invention will sense all objects on the surface and as a result, the hand cannot be rested on the surface while operating. Any drafting aids, such as rulers or curves, have to be arranged to adhere to the surface as they cannot be held by the other hand. It is also possible to detect the orientation of a specially shaped stylus, or of two fingers placed on the operating area surface. Such information can be used in various ways, for example, to input directional as well as positional information. As discussed, the system can also recognise the wider or eraser end of a pencil-like stylus, thereby permitting the thick end or eraser to be used for deletion.

The system, once the capabilities thus far described are available, is further adaptable to improve operator-data processor interactive activity. Designs can be facilitated through the use of software-defined areas on the surface that can be touched by the stylus to direct the system to perform specific functions. Useful feedback can be provided by auditory indication, such as a "beep" device. The function direction regions of the operating area have been given the name soft keys. As previously described as an example of such use, consider entering the end points of a line. A soft key labelled 'LINE' is first touched. The system responds with an audible 'beep' to indicate key detection. The first end-point is touched, and is displayed immediately on a screen in a tracking mode. After the finger is lifted, the point remains displayed until a key labelled 'ENTER' is touched, the system again providing a beep. The second point is similarly entered, and the system responds by drawing the line.

Points can also be entered via a push button activated by the other hand.

In order to facilitate the achieving of the high accuracy capability of the invention, as the principles of the invention are translated into different apparatus, the following analysis of some typical sources of error is advanced.

0083395

73

One source of error is in the provision of the co-ordinates. A measure of the accuracy can be appreciated from the following discussion. For the example square area of side $S/2$, in which $S_x = S_y = S$, the equations 1 and 2 can be expressed as the following equations 19 and 20.

$$\text{Equation 19} \qquad X = \frac{S \tan (A_y) \, (1 - \tan (A_x))}{(1 - \tan (A_x) \, \tan (A_y))}$$

$$\text{Equation 20} \qquad Y = \frac{S \tan (A_x) \, (1 - \tan (A_y))}{(1 - \tan (A_x) \, \tan (A_y))}$$

The major source of error is the measurement of the angles $A_x$ and $A_y$, provided that equations 19 and 20 are evaluated with sufficient numerical precision. The errors in x and y may be estimated by differentiating equations 19 and 20 with respect to the angles. Assuming $\delta A$ to be the magnitude of the angular errors, and $\delta X$ and $\delta Y$ to be the resulting co-ordinate errors. Then

$$\text{Eq.21} \quad X = S\delta A \frac{\left| \tan(A_y) \, (1 - \tan(A_y)) \right| \cos^{-2}(A_x) + \left| 1 - \tan(A_x) \right| \cos^{-2}(A_y)}{[1 - \tan(A_x) \, \tan(A_y)]^2}$$

$$\text{Eq.22} \quad Y = S\delta A \frac{\left| \tan(A_x) \, (1 - \tan(A_x)) \right| \cos^{-2}(A_y) + \left| 1 - \tan(A_y) \right| \cos^{-2}(A_x)}{[1 - \tan(A_x) \tan(A_y)]^2}$$

These diverge if $A_x$ and $A_y$ both become $\pi/4$, as the scan lines are then essentially parallel. Consequently, it is necessary to restrict the stylus from this region. In general, a square or rectangular surface is desirable. Assuming the operating area to be a square of side A inside a larger square of side $S/2$, with one corner located at the scanner as shown in Fig.3A. This leaves an unusable border of width $W=(S/2)-A$. The largest errors occur at the corner nearest where $A_x$ and $A_y$ become $\pi/4$. At this corner, we have:

$$\text{Equation 23} \quad \tan(A_x) = \tan(A_y) = \frac{1 - 2\frac{W}{S}}{1 + 2\frac{W}{S}}$$

which when substituted into equations 21 and 22 and expanding in the small parameter $2W/S$ while keeping the leading terms, the errors will then be as expressed in equation 24.

$$\text{Equation 24} \quad \delta X = \delta Y \simeq \left(\frac{S}{2}\right)\left(\frac{S}{2W}\right)\delta A$$

The position errors will be about $100\,\delta A$ inches per $\delta A$ radians.

The measurement technique described in connection with Fig.14 provides digital measurements of each angle to one part in 2048 or 11 bits. Since the range of $A_x$ and $A_y$ is about 0.4 radians, the quantization error introduces an angular uncertainty of 0.4/2048 radians or about 0.2 milliradians, mr. Thus, random errors of about 0.01 inches are to be expected.

There is a second type of error due to motion of the origin of the light produced by use of a polygonal scanning mirror. The considerations involved in this error may be appreciated by assuming a polygonal mirror whose sides are located a distance R from the rotation axis. The deflected beam appears to originate at the point of contact of the incident beam with the facet. This point moves slightly along the direction of the incident beam as the polygon rotates. The displacement $\delta R$ along the beam is easily calculated in terms of the rotation angle $A_s$. For convenience, let this angle be zero when the facet is perpendicular to the incident beam. We then find:

Equation 25 $\qquad \delta R = R(1 - \cos (A_s))$

This motion can be resolved into motions along the X and Y axis through the following equations 26 and 27.

Equation 26 $\qquad \delta X = R(1 - \cos (A_s))\cos(\pi/4)$

Equation 27 $\qquad \delta Y = R(1 - \cos (A_s))\sin(\pi/4)$

Thus, for the specific example under discussion, the distance R is about 0.25 inches. The maximum value of $A_s$ during a scan is then somewhat less than 20 degrees, hence the variation in X and Y will be about 0.005 inches.

In accordance with the invention, having established the accurate co-ordinates of the position of the stylus, it is also necessary for accurate data entry to establish the point at which the co-ordinate values are to be selected.

In general, manual operation may be erratic, bouncy or subject to anticipatory motion. As the precision of the positioning increases, it becomes necessary to compensate for errors introduced because of these reasons.

The solution in accordance with the invention is to use the data history to specify a particular set of co-ordinates at some time before the specific decision on entering occurs.  This is done by maintaining
a file of co-ordinates with the oldest being dropped as a new one is
added and selecting co-ordinates from the file at an earlier time to
allow for anticipatory motion.

The removal of the stylus from the operating area surface is an
excellent data entry type signal, however, there are several practical
difficulties to be overcome.  First, the last few measured points are
likely to be in error, the amount depending on the details of the
stylus design and the skill of the user.  Second, the stylus may skip
across the surface when moved rapidly, producing false removal signals.
Finally, anticipatory muscular motions may disturb the stylus position
at the critical moment.

The procedure of the invention is based on the concept that the user
will have had the stylus at the correct place slightly prior to the
decision to remove it.  The system maintains a short 'history' file of
co-ordinate values, detects lift-off with a 'debouncing' accommodation
and then uses the data in the history file to place the final point.

In the manual-data processing interface of the invention this is
accomplished with the apparatus of Figs. 1 to 14 which indicates the
presence of a finger or other stylus, as well as the co-ordinate
values, say X and Y, and a subroutine is provided which stores the X-Y
data in a memory element called a circular stack or ring-buffer so that
a previous set of co-ordinates can be selected.  With a circular stack,
or ring-buffer type of memory element, co-ordinate data is added
sequentially until the stack is full, whereupon new co-ordinate data is
added at the beginning, replacing the oldest data.  The effect is to
maintain a record of the last N readings, where N is the stack length.

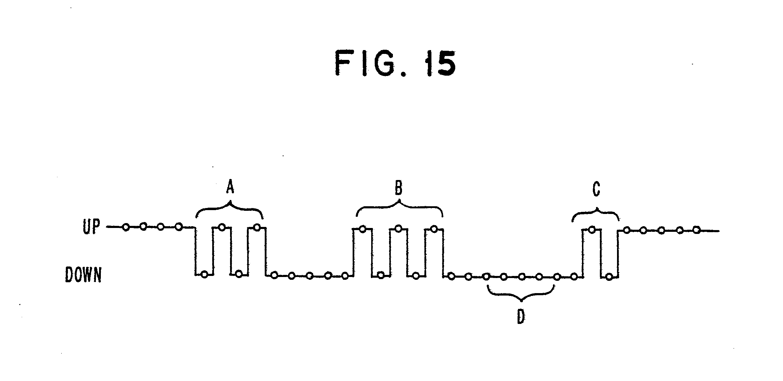

Referring to Fig.15, there is illustrated the nature of the problem to be solved by showing a possible sequence of up/down indications as could occur as a manually moved stylus is lifted by an operator from an operating area surface to indicate a specific point. Each dot represents one sampling point. At section A, the stylus has made initial contact, and then bounced twice. At section B, 3 bounces or missed readings occur as the stylus is moved, and then contact resumes. At section C, one more bounce occurs as the stylus is removed. It will be apparent that co-ordinates selected just before or just after the typical types of bounces will probably be in error. Therefore, a useful procedure should select for final processing only those co-ordinates measured where there is a clear contact indication such as at section D.

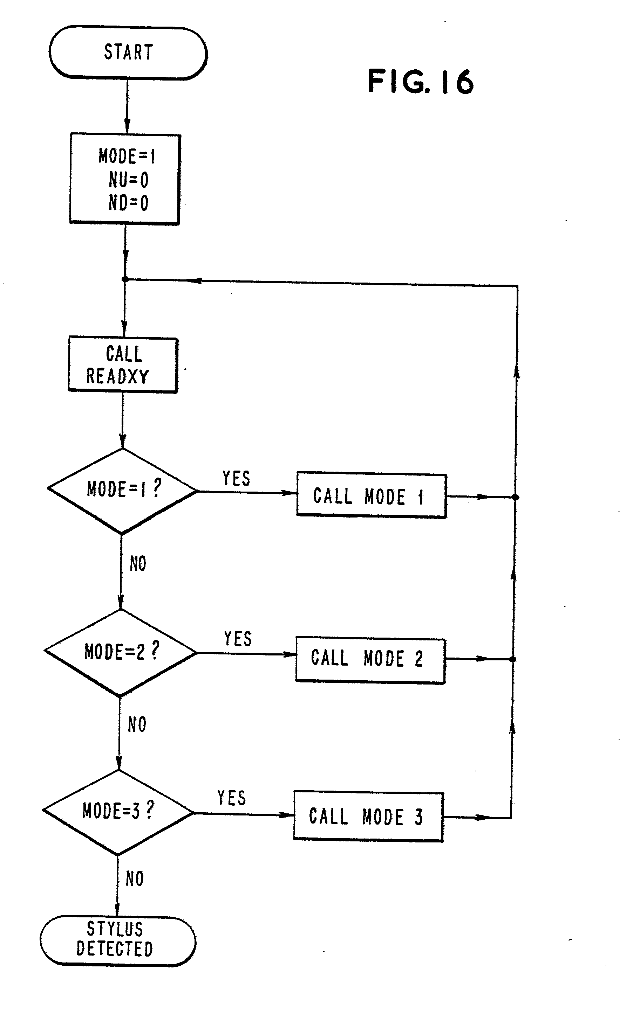

Fig.16 shows a simplified flowchart of the data entry point selection procedure. First the system is initialized by setting a MODE to 1 and counts of stylus up and down to 0. Then the main portion of the algorithm or procedure consists of a loop with co-ordinate data being delivered via the subroutine "READXY". This loop runs until a standard sequence is detected, consisting of an initial steady 'stylus-down' indication, a first loss of contact and a final steady 'stylus-up' indication. In each pass through this loop, one reading is taken and then passed to one of three phase subroutines for processing. The choice of subroutine is determined by the value of a variable called MODE. This variable is modified as appropriate by the subroutines.

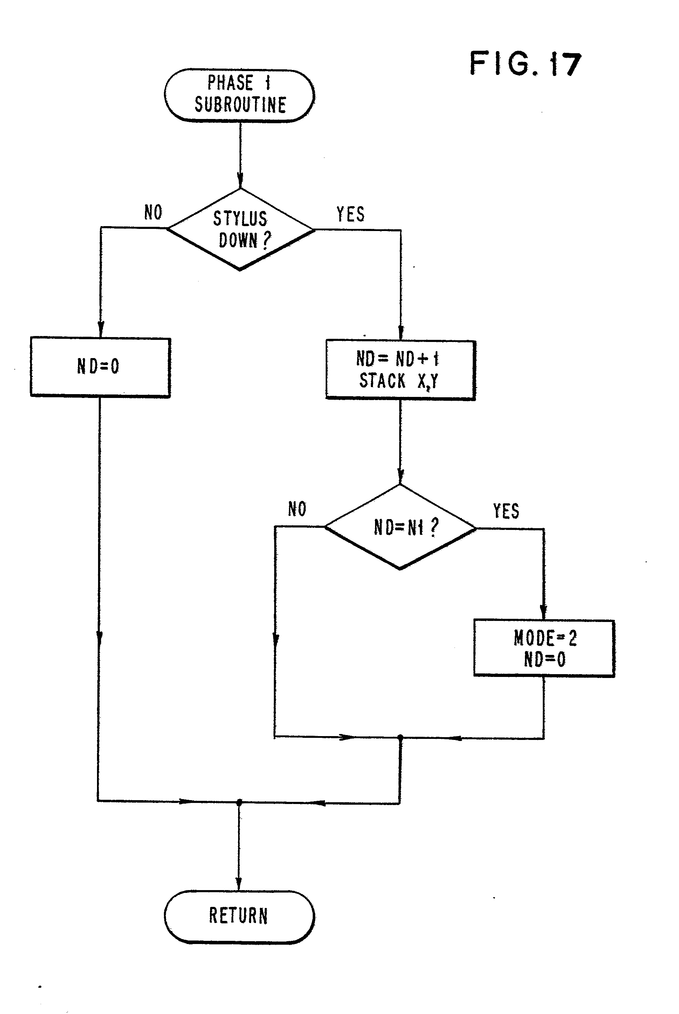

The PHASE1 subroutine illustrated in Fig.17 'looks for' the initial steady presence of a stylus. It does this by counting the number of stylus-down indications (ND), stacking the X-Y co-ordinates and returning to the main loop until a pre-set number, N1, is reached. N1 must be chosen long enough to fill the stack to the desired depth. If a stylus-up indication is obtained first, ND is reset to zero. This ensures that ND cannot reach N1 as the result of a series of bounces. PHASE1 terminates itself when ND reaches N1. It does this by setting MODE equal to 2 before returning to the main loop. At the same time, ND is reset to zero for later use.

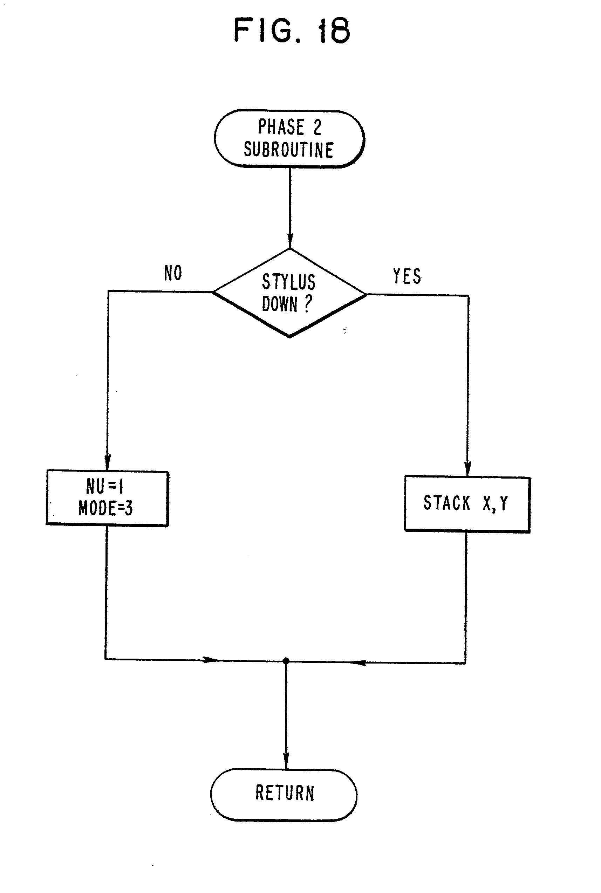

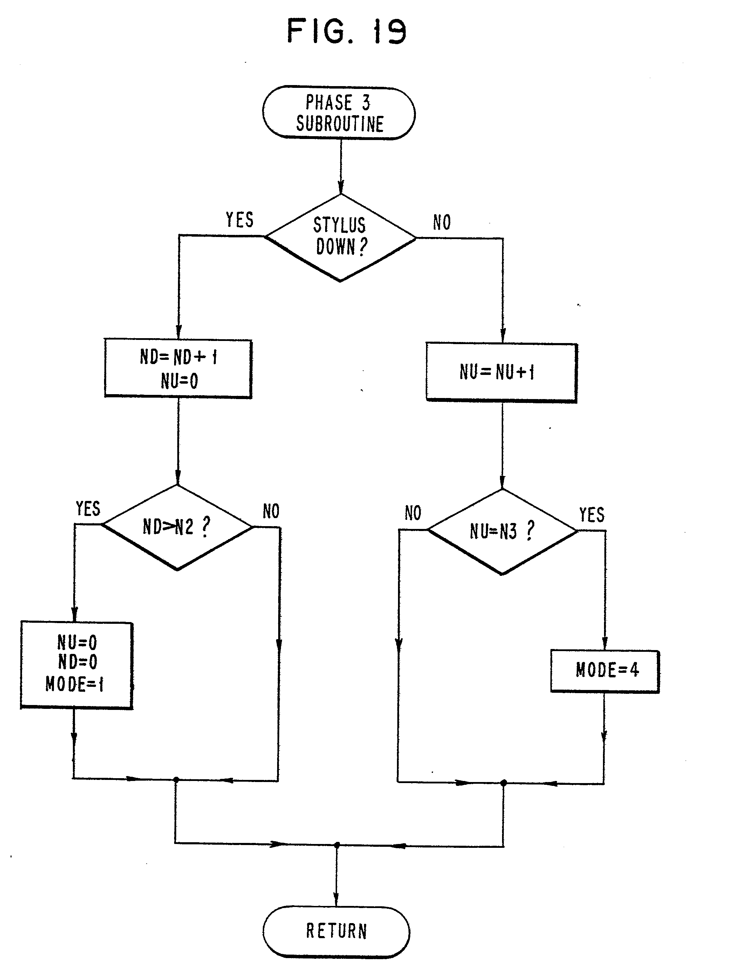

The algorithm must now begin to look for a steady stylus-up indication, while continuing to stack data. The main problem is in dealing with stylus or finger bouncing, which may occur either during positioning or during lift-off. In particular, it is undesirable to stack erroneous data, which might contribute to the final plotted point if the user removes his stylus or finger soon after a few bounces. This situation is avoided by discontinuing stacking after the first stylus-up indication. This cannot be allowed to continue indefinitely, however, as the data in the stack would become out-of-date if the user moved the stylus. A constraint is set on the allowable sequence of events after the first stylus-up indication following PHASE1. In effect, the detection process is lengthened rather than compromise the accuracy of the final measurement. This portion of the algorithm is implemented by the PHASE2 and PHASE3 subroutines illustrated in Figs.18 and 19 respectively. The PHASE2 in Fig.18 subroutine waits for the first stylus-up indication, while continuing to stack data. The subroutine then changes the MODE variable to 3 and sets the stylus-up counter NU to 1. Note that PHASE2 does not change the value of ND, which remains at zero.

The PHASE3 subroutine in Fig.19 then looks for the final steady stylus-up indication by incrementing NU until a value N3 is reached. When this occurs, the subroutine changes the MODE variable to 4 before returning. The main program of Fig.16 will interpret this as a successful detection sequence and the loop will finally terminate. To eliminate the possibility that NU might reach N3 by a series of bounces, NU is reset to zero each time a stylus-down indication occurs.

At the same time, ND is incremented. The entire algorithm is restarted if ND exceeds a value N2, indicating either that the user has changed his mind, or that an accidental bounce occurred. The restart is accomplished by resetting NU and ND to zero, and setting MODE to 1. This prevents the data in the stack from becoming 'stale' or out-of-date. Under the worst conditions, the algorithm will restart N samples after the first stylus-up indication, where N is the product of N2 and N3.

When the detection loop ends, several X-Y values, Na, are removed from the stack and averaged to yield the final co-ordinates. These are taken some distance back in the stack to remove any influence of the lift-off process. The optimum offset, i.e. 'backup' distance from the last recorded point, No, as well as Na and the parameters N1, N2 and N3 depend on the accuracy and reliability of the stylus detection mechanism, and to some extent on the method with which a user operates the device. From a time standpoint, 0.3 seconds is a good time to accommodate the anticipatory reaction time of most users.

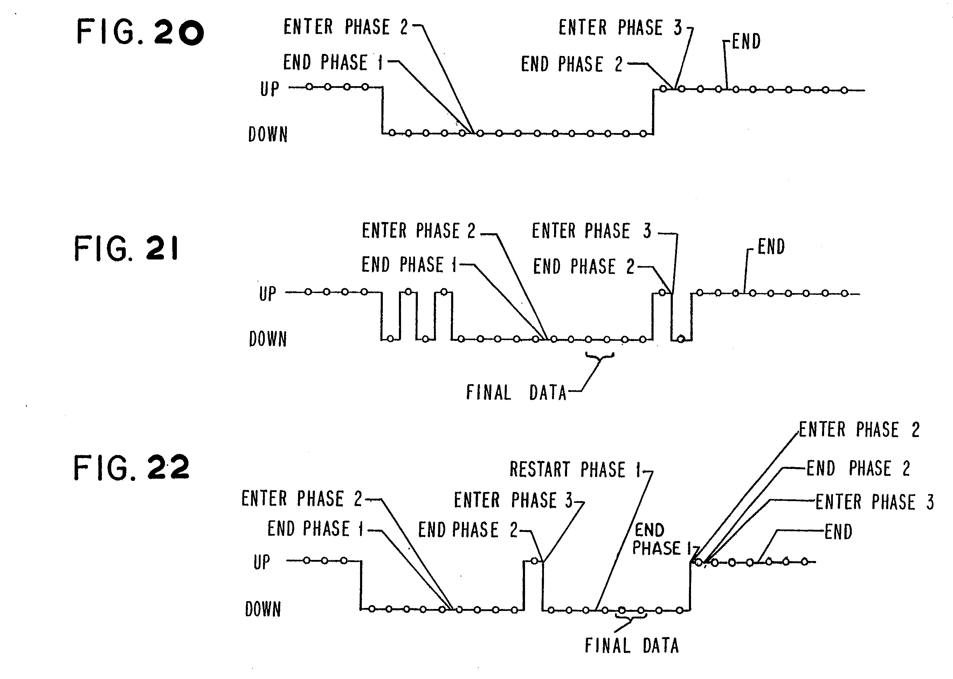

To further illustrate the algorithm, there are shown in Figs. 20, 21 and 22 several possible sequences of stylus signals. The small circles indicate sampling times. The arrows indicate the beginning of a new phase, the return to an old one and the occurrence time of the final co-ordinates. There is an assumption that N1=5, N2=3 and N3=3 and that there is a backup of two sampling times. Two points are selected for averaging, as shown.

It will be appreciated that during phase 1, co-ordinates are added to the stack at each sampling time whilst the stylus is down and that N1 sampling times occur before phase 2 is entered. During phase 2, co-ordinates are added to the stack at each sampling time whilst the stylus is down, but there are no minimum or maximum numbers of sampling times to occur before phase 3 is entered. It is only necessary for the stylus to be up at one sampling time to enter phase 3. During phase 3, no co-ordinates are added to the stack and provided that at N3 consecutive sampling times the stylus is up, the operation is complete. Only if the stylus is down more than N2 times during phase 3 is phase 1 re-entered.

Figure 20 illustrates an ideal sequence in which 5(N1) sets of co-ordinates are added to the stack at five consecutive sampling times with the stylus down during phase 1. A further 10 sets of co-ordinates are added to the stack at ten consecutive sampling times with the stylus down during phase 2. Phase 2 is ended by lifting the stylus and after three sampling times during phase 3, the operation is ended. The two sets of co-ordinates added to the stack at the last two (No) sampling times with the stylus down during phase 2 are disregarded and the two sets added at the previous two (Na) sampling times are averaged.

Figure 21 illustrates a sequence with bounces only during initial placement and final lift-off of the stylus. Two individual sets of co-ordinates are added to the stack at separate sampling points with the stylus down between sampling points with the stylus up during phase 1. Then five sets of co-ordinates are added to the stack at five consecutive sampling points with the stylus down during phase 1 and phase 2 is entered. Six sets of co-ordinates are added to the stack at six consecutive sampling points with the stylus down during phase 2. At the next following sample time the stylus is up and phase 3 is entered. At the first sampling time during phase 3 the stylus is down, but no co-ordinates are added to the stack and three consecutive sampling times follow with the stylus up to bring the operation to an end. The two sets of co-ordinates added to the stack at the last two

81

sampling times with the stylus down during phase 2 are disregarded and the two sets added at the previous two sampling times are averaged.

Figure 22 illustrates a sequence interrupted by a bounce, leading to a restart. Five sets of co-ordinates are added to the stack at five consecutive sampling times with the stylus down during phase 1. Four sets of co-ordinates are added to the stack at four consecutive sampling times with the stylus down during phase 2. Phase 2 is interrupted by an unintentional lifting of the stylus and at the first three sampling times during phase 3 the stylus is down. Phase 1 is re-entered and five sets of co-ordinates are added to the stack at five consecutive sampling times with the stylus down. Phase 2 is entered and at the first sampling time the stylus is up. Phase 3 is entered and after three consecutive sampling times with the stylus up, the operation ends. The two sets of co-ordinates added to the stack at the last two sampling times with the stylus down are disregarded and the two sets added at the previous two sampling times are averaged. These all occur during the repeated phase 1.

The parameters N1, N2 and N3, the offset distance, No, and the number of points to be averaged, Na, have to be determined experimentally to provide good performance. There is one constraint which must be obeyed; the stack must hold at least No+Na data co-ordinate values before stacking is discontinued, in order to have enough data to perform the final average. However, if only this number is stored, then the first data point following the initial stylus-down indication might be included in the final average. This point is likely to be in error, as discussed previously. The possibility can be avoided by choosing N1>No+Na. It should be noted that the data point measured just before the stylus-up indication is automatically rejected, as long as No is greater than zero.

82

Apart from the above constraint, the parameters should be chosen as small as possible in order to achieve a rapid response time. If the device generates frequent false up and/or down indications, the parameters N1, N2 and N3 will have to be increased to provide reliable operation. Similarly, an increase in Na can improve the accuracy of a device producing large but random errors. Finally, an increase in No may be necessary for applications of the invention in which detection of the stylus is above the surface. This can occur where the finger is the stylus and the user tends to withdraw his finger slowly.

The algorithm of Figs. 16 to 19 may be executed on an IBM Series 1 computer equipped with a storage display. A listing of the instructions for a program capable of achieving the goals of the flowcharts follows.

```
***THIS PROGRAM RUNS UNDER FDX ON AN IBM SERIES/COMPUTER      ***
***THE LANGUAGE IS A MIXTURE OF EDS (HIGH-LEVEL) AND ASSEMBLER ***
***THE EXTERNAL SUBROUTINE 'READXY' OPERATES THE TABLET AND    ***
***RETURNS X AND Y CO-ORDINATE VALUES AND A RETURN CODE (RCODE)***
***THE CODE VALUES ARE -1 FOR FINGER-UP, O FOR FINGER DOWN AND ***
***+1 FOR A SOFT-KEY. THIS IS USED TO ESCAPE FROM INPUT        ***
***WHEN THIS SUBROUTINE ENDS, RCODE IS REDEFINED AS FOLLOWS:   ***
***+1 MEANS SOFTKEY STORED IN VARIABLE 'KEY', O MEANS SUCCESS  ***
***NOTES: NB (BOUNCE COUNTER) IS BUMPED TWICE DURING A BOUNCE  ***
***X,Y COOORDINATES IN INCHES. THE EXTERNAL SUBROUTINE 'BEEP'  ***
***GENERATES AUDIO TONES WHEN CALLED. THE SUBROUTINE 'PLOTTER' ***
***PLOTS POINTS ON THE DISPLAY, WHOLE 'ROOT' TAKES SQUARE ROOTS***
*********************************************************************
FINGER1    PROGRAM    MAIN=NO
           SUBROUT    FINGER1
```

```
          ENTRY     FINGER1
          EXTRN     READXY,PLOTTER,BEEP,ROOT
          EXTRN     X,Y,RCODES,STOPPER,HOLDER,HITONE,LOTONE
*********************************************************************
***PHASE 1 DETECTS INITIAL FINGER-DOWN STEP, THEN EXITS TO       ***
***PHASE2  THIS REQUIRES N1 SEQUENTIAL FINGER-DOWN INDICATIONS   ***
*********************************************************************
START     MOVE NU,O,(2,WORD)
          MOVE MODE,1
READ1     DO UNTIL,(MODE,EQ,4)
          CALL READXY
          IF    (RCODE,EQ,1),OR,(STOPPER,EQ,1),OR,(HOLDER,EQ,1),THEN
          RETURN
          ENDIF
          IF    (RCODE,EQ,O),THEN
          MOVE PEN,DOWN
          ELSE
          MOVE PE,UP
          ENDIF
          IF    (MODE,EQ,1),THEN
          CALL MODE1
          ELSE
          IF    (MODE,EQ,2),THEN
          CALL MODE2
          ELSE
          CALL MODE3
          ENDIF
          ENDDO
GOTIT     EQU *
          CALL RMSTEST
          IF    (RMS,LT,TOL,FLOAT),THEN
          CALL BEEP,HITONE
```

84

```
MOVE RCODE,O
RETURN
ELSE
CALL BEEP,LOTONE
MOVE MODE,1
GOTO START
ENDIF
```

85

```
*******************************************************************
***MODE 1: STACK DATA TILL STEADY PEN-DOWN SIGNAL, THEN SET MODE2*****
*******************************************************************
        SUBROUT   MODEL
        IF        (PEN,EQ,UP),THEN
        MOVE      ND,O
        RETURN
        ENDIF
        ADD       ND,1
        IF        (ND,GT,1),THEN
        CALL      PUSH
        ENDIF
        IF        (ND,GT,N1),THEN
        MOVE      ND,O
        MOVE      MODE,2
        CALL      BEEP,HITONE
        ENDIF
        RETURN
```

```
*********************************************************************
***MODE 2: STACK DATA TILL FIRST FINGER-UP SIGNAL, THEN SET MODE3*****
*********************************************************************
        SUBROUT    MODE 2
        IF         (PEN,EQ,UP),THEN
        MOVE       NU,1
        MOVE       MODE,3
        ELSE
        CALL       PUSH
        ENDIF
        RETURN
*********************************************************************
***LOOK FOR STEADY PEN-UP SIGNAL (NU=N3) SET MODE 1 IF PEN GOES  *****
***DOWN AGAIN (ND=N2)                                            *****
*********************************************************************
        SUBROUT    MODE 3
        IF         (PEN,EQ,UP),THEN
        ADD        NU,1
        IF         (NU,GE,N3),THEN
        MOVE       MODE,4
        ENDIF
        ELSE
        ADD        ND,1
        MOVE       NU,O
        IF         (ND,GE,2),THEN
        MOVE       NU,O,(2,WORD)
        MOVE       MODE,1
        ENDIF
        ENDIF
        RETURN
```

The set of instructions is called FINGER1 and includes some subroutine activity such as READXY described above. The instructions also include several refinements not specifically addressed in the flowcharts. First, the computer controls a two-tone audio beeper. This provides the user with feedback at the critical steps of the detection process. A high-pitched beep is emitted when leaving PHASE1, and also when the final point is plotted, while a low-pitched beep is emitted if PHASE1 has to be restarted.

A second refinement involves another soft key region of the operating area surface, not illustrated, designated as a 'sink'. Touching this area allows the user to cancel an input step entirely by moving the stylus there before lift-off. This is preferable to entering an unwanted point and then undoing the effects later via a second step.

A third refinement includes, in addition to averaging several points to obtain the final co-ordinates, capability to calculate the rms scatter and no action is to be taken if it is excessive, e.g. more than 3 times the normal value. This effectively rejects points taken with the stylus in motion, and discards obviously noisy measurements. A low-pitched beep is emitted for feedback if a measurement is discarded.

Although the technique of Figs.16 to 19 is described as employed in accordance with the interface of the invention, the concept can also be usefully applied in totally different circumstances. As one example, the combination of a guidance control with a triggering mechanism.

In this example a weapon, such as a rifle equipped with an angular-rate or angular-acceleration transducer, is trained by a torquing mechanism. In accordance with the invention, a short sequence of 2-dimensional angular acceleration measurements would be stored until the trigger was

88

pulled, whereupon any disturbance caused by the trigger pull would be removed by the torquing mechanism before the gun was fired electrically.

As another example, the positioning of manufacturing apparatus such as a wire-bonding machine, in which it is necessary to first position a semiconductor chip by human vision and control under a bonding tool, and then to actuate the actual bonding. This, and similar operations can be improved by maintaining a file of co-ordinates of the chip or guidance control, and repositioning under computer control after the final manual signal but prior to performing the actual step. In this way, the actuation would not disturb the final alignment. This could be carried further by first storing all the corrected bonding co-ordinates as entered by the operator, and then performing all the bonds as a second step.

It will be appreciated that the presence or absence of a stylus has to be detected from two sources, virtual or actual, and that, as so far described, the detections are by a single light source and photodetector, so that the area has to be swept twice. However, the two sweeps could be performed simultaneously, for example as described below.

As the size of the reference surface increases, it has been found to be increasingly difficult and expensive to provide a sufficiently rigid mounting frame, and adjustment to ensure beam parallelism above and below the reference surface over the entire area requires considerable care.

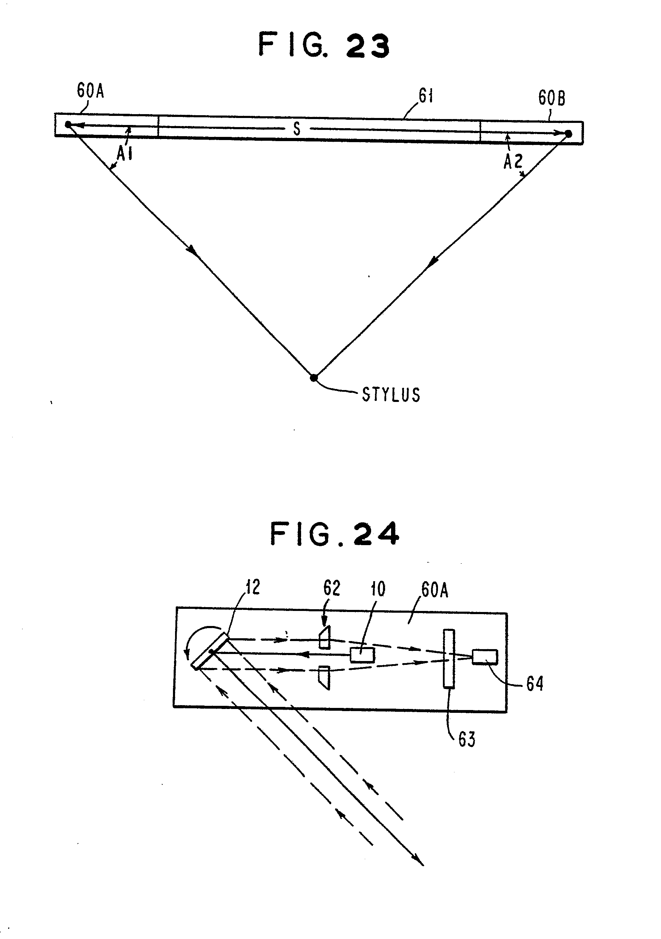

A preferred optical system according to the invention is illustrated in Figs.23 and 24, in which dihedral mirrors are eliminated by adding a second scanner.

Two scanners mounted at opposite corners of one edge of an operating surface area and the remaining three sides are lined with retroreflective tape. The tape does not need to be well aligned with respect to the scanners, although the scanning plane must be aligned with respect to the desired operating area surface. Although two scanning mirrors are required, a single laser and/or photodetector channel can be used if the rotating mirrors are properly phased. This structure avoids a requirement for a reference surface, to prevent the stylus from interrupting any beams passing beneath the plane of detection as the beams are now confined to a single plane. This configuration is particularly well suited for use in front of a projection type large display.

Two similar scanning devices 60A and 60B are mounted a definite distance apart at opposite ends of a support 61, such as a bar. The scanner 60A (Fig.24) includes a source 10 providing a beam which is swept by scanner 12. The operating area is surrounded by retroreflective strips similar to 13 and 15 but covering the remaining three sides. The strips may be bowed to improve the angle of incidence of the light. The reflected light returns along the beam as shown by the dotted lines to the scanner 12 and is reflected through a split converging lens 62 and converging lens 63 to a sensor 64. When either beam strikes a stylus, the beam is interrupted and the sensor 64 detects the absence of reflected light.

A start pulse is easily obtained from the detector, as the mirror will reflect the laser light directly into the detector lens before scanning the surface. The stylus co-ordinates, when the sensors detect

90

interruption, can then be obtained by a simple trigonmetric calculation using the angle from each scanner and the known scanner separation distance S. Thus, if the angles measured by the scanners are A1 and A2, then the X and Y co-ordinates of the stylus are set forth in equations 28 and 29.

Equation 28    $X = (S/2)((TAN(A1)-TAN(A2))/TAN(A1)+TAN(A2))$

Equation 29    $Y = (S)(TAN(A1)TAN(A2))/(TAN(A1)+TAN(A2)$

What has been described is an interface between manual operation and data processing involving the dual capability to optically determine a precise location of a manual indicator and to select which of the manually traversed exact locations represents the specific data desired. The capabilities of the invention provide both high accuracy and greater flexibility than previously available.

91.

CLAIMS

1    An interface for determining the co-ordinate location of a manually movable indicator (27) on a surface (26,30), comprising means (12,17;12,64) for repeatedly sensing the position of the indicator on the surface, means for storing a series of data representative of consecutive positions of the indicator, means for indicating a termination of the sensing, and means for selecting from the stored series the data representative of one or more positions of the indicator prior to a termination indication, disregarding the data representative of one or more positions of the indicator immediately prior to the termination indication.

2    An interface according to claim 1, in which the data storing means is a circulating memory.

3    An interface according to claim 1 or 2, in which the selected data is from two or more consecutive positions and is averaged to determine the co-ordinate location.

4    An interface according to any preceding claim, in which the termination indicating means is responsive to removal of the indicator from the surface during a period of a predetermined number of position sensings.

5    An interface according to any preceding claim, in which the data storing means is responsive to application of the indicator to the surface during a period of a predetermined number of position sensings.

6    An interface according to any preceding claim, in which the repeated sensing means includes a scanning light beam and means to detect interruption of the beam by the indicator on the surface.

7    An interface according to any preceding claim, including means to retain and display the location of the indicator on a display.

8    An interface according to claim 7, in which the display is a cathode ray tube.

9    An interface according to claim 7 or 8, in which the display includes erase means responsive to a physical characteristic (29) of the indicator (27).

10    An interface according to any preceding claim, in which the disregarded data is that obtained during a period of 0.3 seconds prior to termination indication.

11    An interface for determining the co-ordinate location of a manually movable indicator (27) on a surface (26,30), comprising means (12) for scanning a light beam over the surface, means (17,64) for detecting interruption of the light beam by the indicator on the surface, means for deriving angular information from such interruption, and means for determining co-ordinate information from such angular information.

12    An interface according to claim 11, in which the light beam is reflected from stationary retroreflective means (13,15) to photodetector means (17) to detect interruption.

13    An interface according to claim 12, in which the stationary retroreflective means includes two retroreflectors inclined to each other, whereby the scanning light beam passes over the surface twice for each position determination.

14    An interface according to claim 13, in which the two retroreflectors are at right angles.

15    An interface according to any of claims 11 to 14, in which the light beam passes on both sides of the surface.

16    An interface according to claim 15, in which the beam is reflected by dihedral mirror means (18,19).

17    An interface according to any of claims 11 to 16, in which the light beam is derived from a single light source subject to reflection to produce a scanning light beam from two separated virtual light sources.

18    An interface according to any of claims 11 to 16, in which two light beams are used from two separated light sources.

19    An interface according to claim 17 or 18, in which the co-ordinate information is derived from the tangential relationship of the beams from the two light sources to a fixed line or lines.

20    An interface according to claim 17 as appendant to claim 19, in which x and y cartesian co-ordinates are developed from tangent

94.

relationship involving the angles $A_x$ and $A_y$ representing respectively the angles a line through the indicator makes with the x and y axes and the specific distances along the x and y axes respectively are expressed as:

$$X = \tan(A_y) \frac{S_y - S_x \tan(A_x)}{1 - \tan(A_x)\,\tan(A_y)}$$

and

$$Y = \tan(A_x) \frac{S_x - S_y \tan(A_y)}{1 - \tan(A_x)\,\tan(A_y)}$$

where $S_x$ and $S_y$ are the specific distances of the virtual light sources along the x and y axes.

21   An interface according to claim 18 as appendant to claim 19, in which x and y cartesian co-ordinates are tangent relationships involving the angles $A_1$ and $A_2$ representing respectively the angles made by lines through the indicator with a line joining the light sources, the sources being separated by a distance S, according to the relationships:

$$X = \frac{S}{2} \frac{(\tan(A_1) - \tan(A_2))}{(\tan(A_1) + \tan(A_2))}$$

and

$$Y = S \frac{(\tan(A_1) - \tan(A_2))}{(\tan(A_1) + \tan(A_2))}$$

22    An interface according to any preceding claim, in which timing is
derived from the scanning light beam.

# FIG . 1

# FIG. 2

FIG. 3A

VIRTUAL BEAM

LIGHT

EDGE OF SURFACE

TOP SURFACE

FIG.3B

EDGE OF SURFACE

FIG.3C

FIG. 4

FIG. 5

# FIG. 6

# FIG. 7

# FIG. 8

# FIG. 9

# FIG. 10

0083395

FIG. 11

8/16

35

36

16 LIGHT

17

-15V

—

+

34

OUTPUT

SIGNAL INPUT

38 41

40

—

+

37

42

LOGIC LEVEL OUTPUT

-15V

43

THRESHOLD ADJUST

FIG.12

39

SAMPLING GATE

FIG. 13A

ANALOG SIGNAL

TIME

FIG.13B

ANALOG SIGNAL

TIME

FIG.13C

DIGITAL SIGNAL

TIME

FIG. 14

# FIG. 15

FIG. 16

0083395

11/16

0083395

FIG. 17

# FIG. 18

0083395

# FIG. 19

FIG. 20

FIG. 21

FIG. 22

# FIG. 23

# FIG. 24